# EUROPEAN PATENT APPLICATION

(11) **EP 4 770 197 A2**
(43) Date of publication of application: **01.07.2026**
(21) Application number: 26172782.0
(22) Date of filing: 13.12.2022
(51) Int. Cl.: H04W 40/02

(54) **METHODS AND APPARATUS FOR USE IN A PROCESS FOR MIGRATING RESOURCES BETWEEN INTEGRATED ACCESS AND BACKHAUL TOPOLOGIES**

(30) Priority: 16.12.2021 GB 202118300
(62) Divisional of application: 22835034.4
(71) Applicant: Canon Kabushiki Kaisha, Ohta-ku Tokyo 146-8501 (JP)
(72) Inventor: LAGRNGE, Pascal, 35517 Cesson-Sévigné Cedex (FR); VISA, Pierre, 35517 Cesson-Sévigné Cedex (FR)
(74) Representative: Canon Europe Limited

(57) **Abstract**

Methods for use in a process for migrating traffic from a first Integrated Access and Backhaul, IAB, topology (6001) to a second IAB topology (6002) of a communication system (600) are disclosed. Each of the first IAB topology and the second IAB topology comprises a set of IAB nodes and a donor Central Unit, CU. A method at a first donor CU (601) of the first IAB topology comprises: after making a decision associated with traffic to be offloaded from the first IAB topology (6001) to the second IAB topology (6002), sending, to a second donor CU (602) of the second IAB topology, a request related to migration of traffic including at least one set of Information Elements, IEs, each of the at least one set of IEs including an identifier related to the traffic and information related to Quality of Service, QoS, associated with the traffic; and receiving, from the second donor CU (602), a first message, wherein in a case where at least one of the set of IEs in the request is accepted by the second donor CU (602), the first message includes information indicating the at least one of the set of IEs has been accepted and the at least one identifier included in the respective accepted set of IEs.

## Description

### Field of the Invention

The present invention generally relates to methods for use in a process for migrating resources between Integrated Access and Backhaul, IAB, topologies of a wireless communication system and apparatus or elements of the wireless communication system for implementing at least some steps of the methods.

### Background

Wireless communication systems are largely deployed to address a wide range of applications, from mobile broadband, massive machine type communications to Ultra Reliable Low Latency Communications (URLLC). Such systems allow a plurality of user equipment (UE) or mobile terminals to share the wireless medium to exchange several types of data content (e.g. video, voice, messaging ...) over a radio access network (RAN) through one or more base stations. The base stations are conventionally wired-connected (e.g. through fiber) to a core network, forming an intermediate network, named backhaul (BH).

Examples of such wireless multiple-access communication systems include systems based on 3rd generation partnership project (3GPP - RTM) standards, such as fourth-generation (4G) Long Term Evolution (LTE) or recent fifth-generation (5G) New Radio (NR) systems, or systems-based IEEE 802.11 standards, such as WiFi.

The demand for network densification increases due to the rising number of users and higher throughput requirement.

Facing the issues of high deployment costs and time of the wired backhaul networks with network densification, 3GPP has proposed, in recent release 16 for 5G NR, a wireless backhaul, also known as Integrated Access and Backhaul, IAB, where part of the wireless (i.e. radio) spectrum is used for the backhaul connection of base stations instead of fiber. The wireless backhaul communications (between base stations) may use the same radio resources as access communications (between a base station and UEs).

IAB turns out to be a competitive alternative to the fiber-based backhauling in dense areas or areas difficult to cover, as it allows scalable and rapid installations without the burden of cabling the base stations.

IAB is most likely to operate in the millimeter wave (mmWave) band to achieve the required Gbps (gigabits per second) data rate.

However, millimeter waves are known to be subject to strong attenuations of signal strength in some weather conditions (rain, fog), and to blockage in case of obstacles located in the path between the emitter and the receiver.

To cope with these potential radio link failures, a topological redundancy can be provided within the IAB framework, where multiple data paths are set up between the IAB base station directly connected to the core network (also referred to as the "IAB-donor") and the IAB base station serving a UE (also referred to as the "access IAB-node" for the UE). Several intermediate IAB base stations (also referred to as IAB-nodes) may be involved in each of the several paths between the IAB-donor and the access IAB-node, thus forming alternative data paths within a multi-hop IAB network.

A path through a set of IAB-nodes is defined by default along which the data are preferably transmitted. Also, one or more back-up paths along different sets of IAB-nodes are defined that can be used in case a radio link failure (RLF) occurs on any link of the default path. A link is defined between two successive IAB-nodes in the backhaul network. A back-up path is also useful in case of congestion of a link due to an excessive demand of application traffic compared to the default link capacity. Traffic re-routing to a back-up path or load balancing between the default path and one or more back-up paths may be activated to mitigate the congestion.

Like a gNB, the IAB-donor consists of a central unit (CU or gNB-CU functionality) and of one or more distributed unit(s) (DU or gNB-DU functionality). Each IAB-node (including an access IAB-node) coupled directly or indirectly to the IAB-donor comprises an IAB-MT (IAB-Mobile Termination) to communicate in the upstream direction toward the IAB-donor and an IAB-DU (IAB-Distributed Unit) to communicate in the downstream direction toward the UEs.

To enable routing over multiple backhaul hops, a specific IAB protocol sublayer is introduced, the backhaul adaptation protocol (BAP) sublayer, which is specified in the 3GPP release 16 specification TS 38.340 (version 16.3.0). There is one BAP entity in each IAB-MT, one BAP entity in each IAB-DU, and one BAP entity in each IAB-donor-DU. A unique BAP address is assigned to each IAB-node and to each IAB-donor-DU. The BAP sublayer encapsulates IP SDUs (Service Data Units) into BAP PDUs (Protocol Data Units), where each BAP PDU consists of a BAP header and a payload section, which includes the IP SDUs.

The BAP header includes a BAP Routing ID, which is the concatenation of the destination BAP address and the identifier of the backhaul path to follow (Path ID). The BAP routing ID is set by the BAP sublayer of the initiator IAB-donor-DU (in the downstream direction) or the initiator IAB-node (in the upstream direction). Then, BAP PDUs are routed according to the BAP Routing ID using a backhaul routing table configured by the IAB-donor-CU in each IAB-node and in each IAB-donor-DU. Upon reception of a BAP PDU in a BAP entity, the destination BAP address is compared to the local BAP address. If the local address matches with the destination BAP address, the BAP header is removed and the payload is delivered to the upper layers.

For a BAP entity in an IAB-donor-DU, if the destination BAP address does not match the local BAP address, the BAP PDU is discarded. For a BAP entity in the IAB-MT or the IAB-DU of an IAB-node, if the destination BAP address does not match the local BAP address, the BAP PDU is delivered to the collocated BAP entity for routing and transmission to the next hop. The backhaul routing table provides the egress link corresponding to the next hop BAP address, using the BAP routing ID in the BAP PDU header as the entry of the table. In case the indicated egress link is not available, for instance due to radio link failure (RLF), an entry with the same destination BAP address is selected regardless of the Path ID. The BAP PDU is discarded if no entry in the routing table matches the BAP Routing ID or the destination BAP address of the BAP header.

According to the described behaviour for IAB, the 3GPP release 16 specifications do not allow to re-route BAP PDUs in upstream direction towards a different IAB-donor-DU, even though several IAB-donor-DUs provide a connection to the same IAB-donor-CU. Indeed, in the upstream direction the destination BAP address of BAP PDUs corresponds to one of the several IAB-donor-DUs available. As the IAB-donor-DUs are set with different BAP addresses, an IAB-node may find an alternative path in its routing table to reach the IAB-donor-DU targeted by the destination BAP address, but it has no information to identify an alternative IAB-donor-DU that could be reached through an alternative path. Moreover, assuming a BAP PDU arrives at the alternative IAB-donor-DU, this latter would discard the BAP PDU as the destination BAP address would not match its own BAP address.

Besides, 3GPP has been considering inter-donor redundancy, where an IAB-node, referred to as a Boundary IAB node, has one RRC interface terminating at a different IAB-donor-CU than its F1 interface. The Boundary IAB-node, even though belonging to a single IAB network, i.e. belonging to a single IAB-donor CU (i.e. a first IAB-donor CU) for configuration and management, is thus able to route BAP PDUs from a first IAB network managed by the first IAB-donor CU to a second IAB network managed by the different IAB-donor CU (i.e. a second IAB-donor CU).

The advantage of such inter-donor redundancy lies in the ability for the first IAB-donor-CU to perform offloading by routing some of its BAP PDUs through the second IAB network, thus mitigating congestion issues or overcoming radio link failure (RLF) issues that may arise in the first IAB network or improving communication robustness through topological redundancy.

In this respect, several approaches for inter-donor redundancy may be considered, which address the aforementioned load balancing and communication robustness issues.

A first approach would consist in traffic re-routing, or offloading, from a first IAB topology, also referred to as the source IAB topology or source topology, to a second IAB topology, also referred to as the target IAB topology or a target topology, without performing any IAB node migration. According to this first approach, some traffic may be routed over the source and target topologies through a boundary node, but the IAB topology of the boundary node is not changed. In other words, the boundary node still belongs to the source topology.

A second approach would consist in performing partial migration of a boundary node along with the aforementioned traffic offloading. According to this approach, the IAB-MT part of the boundary node (RRC connection) is migrated to the target IAB-donor-CU, while the IAB-DU part of the boundary node and its potential descendant IAB node(s), if any, still belongs to the source IAB-donor-CU.

A third approach would consist in performing full migration of a boundary node and all or part of its descendant IAB node(s), if any, along with the aforementioned traffic offloading. According to this approach, both the IAB-MT and the IAB-DU parts of the boundary node and its potential descendant IAB node(s), if any, are migrated (for both RRC and F1 connection) from the source IAB-donor-CU to the target IAB-donor-CU. After full migration, the IAB-node is no more a boundary node. Also, the offloaded traffic may be fully handled by the target IAB-donor-CU.

Partial or full migration of an IAB-node (not a boundary node) may also be performed after a radio link failure on the link with the parent IAB-node, followed by a recovery on a different parent IAB-node belonging to another IAB topology.

However, source and target topologies are managed independently by their respective IAB donor CU. Therefore, the migration of one or more IAB-nodes and/or traffic from a source topology to a target topology may create some new constraints or issues, e.g. traffic load increase over one or more backhaul links of the target topology, extra processing at target donor CU, which could significantly impact the performance of the target topology.

Therefore, some new mechanisms are required to facilitate inter-topology migration whilst addressing the aforementioned issues, and limiting the complexity of the processing at IAB-donor CUs as well as the latency that would result from such processing.

### Summary

In accordance with a first aspect of the present invention, there is provided a method for use in a process for migrating resources from a source IAB topology to a target IAB topology of a communication system, each of the source IAB topology and the target IAB topology comprising a set of IAB nodes and a donor Central Unit, CU. The method at the target donor CU of the target IAB topology comprises: determining migration capabilities of the target IAB topology for supporting additional resources of another IAB topology; sending, to the source donor CU of the source IAB topology, migration capability information, the migration capability information indicating the determined migration capabilities of the target IAB topology.

Since the target donor CU sends the migration capability information indicating the determined migration capabilities of the target IAB topology to the source donor CU, the source donor CU knows the migration capabilities of the target IAB topology (or in other words knows the constraints of the target IAB topology) and the source donor CU can therefore use the migration capability information of the target IAB topology received from the target donor CU to determine what resources of the source IAB topology 6001 it will request to be migrated. As the source donor CU knows from the migration capability information what resource migration is likely to be accepted by the target donor CU, this can simplify the migration setup process by minimising the amount of negotiation between the source donor CU and target donor CU which in turn minimises processing and signalling overhead. In addition, since the target donor CU sends the migration capability information of the target IAB topology to the source donor CU, any constraints on the target topology can be taken into account when migrating one or more IAB-nodes and/or traffic from a source topology to a target topology so that impact on the performance of the target topology can be controlled.

In accordance with a second aspect, there is provided a method for use in a process for migrating resources from a source IAB topology to a target IAB topology of a communication system, each of the source IAB topology and the target IAB topology comprising a set of IAB nodes and a donor Central Unit, CU. The method at the source donor CU of the source IAB topology comprises: determining a plurality of different migration schemes associated with resources to be migrated from the source IAB topology to the target IAB topology, each of the plurality of different migration schemes representing resource requirements for supporting resources to be migrated to the target IAB topology; sending, to the target donor CU of the target IAB topology, a migration request including migration information for each of the plurality of different migration schemes, the migration information indicating the resource requirements for the respective migration scheme; receiving, from the target donor CU, a migration response, wherein the migration response is one of: a) a migration accept response indicating at least one of the migration schemes has been accepted; and b) a migration reject response indicating none of the migration schemes have been accepted.

By determining a plurality of different migration schemes, the source donor CU may determine alternative migration schemes for the resources to be migrated. For example, each of the different migration schemes have one or more different resource requirements (e.g. different level of QoS and/or different bandwidth requirements and/or different processing load requirements) and thus, provide alternative migration schemes for the resources to be migrated. By determining a plurality of different migration schemes, the source donor CU increases the likelihood that the target donor CU will be able to support the resource requirements of at least one of the migration schemes. This helps to reduce the amount of signalling and processing load required to negotiate resource migration between the source donor CU and target donor CU.

In an example, a migration reject response may include migration capability information, the migration capability information indicating capabilities of the target IAB topology for supporting additional resources of another IAB topology.

By including at least the migration capability information with the migration reject response, the source donor CU can determine why the target donor CU did not accept any of the migration schemes and from the capabilities may be able to determine a 'new' migration scheme based on the migration capability information provided by the target donor CU which is more likely to be accepted by the target donor CU. This helps to reduce the amount of signalling and processing load required to negotiate resource migration between the source donor CU and target donor CU.

In accordance with another aspect, there is provided a method for use in a process for migrating resources from a source Integrated Access and Backhaul, IAB, topology to a target IAB topology of a communication system, each of the source IAB topology and the target IAB topology comprising a set of IAB nodes and a donor Central Unit, CU, the method at the source donor CU of the source IAB topology comprising: determining at least one migration scheme associated with resources to be migrated from the source IAB topology to the target IAB topology, the at least one migration scheme (e.g. each of the at least one migration scheme when there is more than one migration scheme) representing resource requirements for supporting resources to be migrated to the target IAB topology; sending, to the target donor CU of the target IAB topology, a migration request including migration information for the at least one migration scheme (e.g. for each of the at least one migration scheme when there is more than one migration scheme), the migration information indicating the resource requirements for the at least one migration scheme (e.g. for the respective migration scheme when there is more than one migration scheme); receiving, from the target donor CU, a migration response, wherein the migration response is one of: a) a migration accept response indicating at least one of the migration schemes has been accepted; and b) a migration reject response indicating none of the migration schemes have been accepted, wherein a migration reject response includes migration capability information, the migration capability information indicating capabilities of the target IAB topology for supporting additional resources of another IAB topology.

In accordance with a third aspect, there is provided a method for use in a process for migrating resources from a source IAB topology to a target IAB topology of a communication system as recited in claim 34 of the accompanying claims.

In accordance with a fourth aspect, there is provided a method for use in a process for migrating resources from a source IAB topology to a target IAB topology of a communication system as recited in claim 35 of the accompanying claims.

In accordance with a fifth aspect, there is provided an apparatus as recited in claims 37 to 70 of the accompanying claims.

In accordance with a sixth aspect, there is provided a donor Central Unit, CU, as recited in claim 71 of the accompanying claims.

Further example features of the invention are characterised by the other independent and dependent claims.

Any feature in one aspect of the invention may be applied to other aspects of the invention, in any appropriate combination. In particular, method aspects may be applied to apparatus/device/unit aspects, and vice versa.

Furthermore, features implemented in hardware may be implemented in software, and vice versa. Any reference to software and hardware features herein should be construed accordingly. For example, in accordance with other aspects of the invention, there are provided a computer program comprising instructions which, when the program is executed by a processing unit, cause the processing unit to carry out the method of any aspect or example described above and a computer readable storage medium carrying the computer program.

It should also be appreciated that particular combinations of the various features described and defined in any aspects of the invention can be implemented and/or supplied and/or used independently.

### Brief Description of the Drawings

Different aspects of the invention will now be described, by way of example only, and with reference to the following drawings in which:
Figure 1 is a schematic diagram illustrating an example wireless communication system in which the present invention may be implemented according to one or more embodiments;
Figures 2a and 2b are schematic diagrams illustrating stacks of some protocol layers involved in IAB operations;
Figure 3 is a schematic diagram illustrating the format of a BAP Protocol Data Unit (PDU) or packet;
Figure 4 is a schematic diagram illustrating the routing management in an IAB network;
Figures 5a-d illustrate fields of routing tables in IAB-nodes according to 3GPP TS 38.300;
Figure 6 is a schematic diagram illustrating an example arrangement of an IAB communication system presenting network path diversity in which the present invention may be implemented according to one or more embodiments;
Figure 7 and Figure 8 illustrate, using a flowchart, example operations at IAB donor CUs for managing inter-topology conditional migration between a plurality of IAB networks according to some embodiments of the invention;
Figure 9 and Figure 10 are schematic and simplified diagrams illustrating example message flows for managing inter-topology conditional migration between a plurality of IAB networks according to some embodiments of the invention;
Figure 11 is a block schematic diagram of an example wireless communication device in accordance with embodiments of the present invention;
Figure 12 illustrates, using a flowchart, an example method, performed at a target donor CU, for use in a process for migrating resources from a source IAB network (or source IAB topology) to a target IAB network (or target IAB topology) of a IAB communication system in accordance with embodiments of the present invention;
Figure 13 illustrates, using a flowchart, an example method, performed at a source donor CU, for use in a process for migrating resources from a source IAB network (or source IAB topology) to a target IAB network (or target IAB topology) of a IAB communication system in accordance with embodiments of the present invention.

### Detailed Description

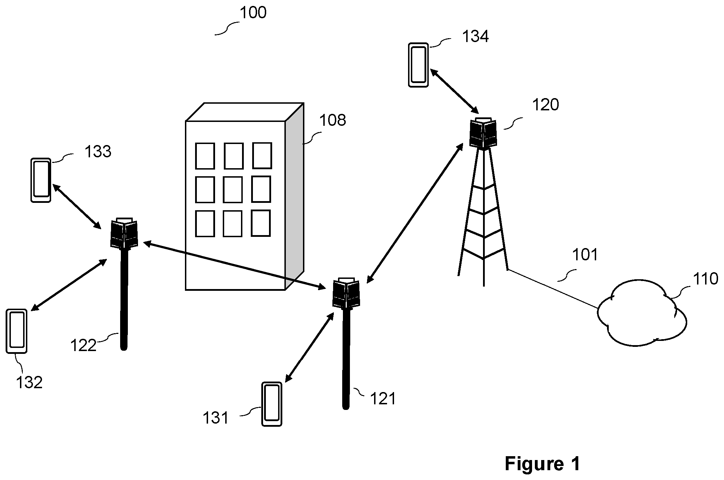

Figure 1 illustrates an example communication system 100 in which the present invention may be implemented according to one or more embodiments.

As depicted, the example system 100 is a wireless communication system, in particular a mobile radio communication system such as a fifth-generation (5G) New Radio (NR) system including a wireless Integrated Access and Backhaul communication system. Although in the following description, embodiments and examples of embodiments of the present invention will be described with respect to a 5G NR system, it will be appreciated that it is not intended that the present invention is limited to 5G NR systems and may be used in any wireless communication systems having an integrated access and backhaul communication system which shares radio resources for wireless access links and wireless backhaul links.

The system 100 comprises a plurality of UEs (User Equipment) 132, 133, 131 and 134, a remote core network 110, a main Base Station 120, and two Integrated Access and Backhaul (IAB) stations 121 and 122 or IAB nodes 121 and 122 (also referred to in the following as IAB-nodes).

The main Base Station 120, also referred to as the IAB-donor 120 (or IAB donor), is connected to the core network 110 through a wired link 101, preferably an optical fiber or any other wired means. In embodiments and examples of embodiments of the invention, IAB-donor 120 is a 5G NR gNB with additional functionality to support IAB features, as defined in 3GPP TS 38.300 v16.2.0 specification document.

In order to extend the network coverage of IAB-donor 120 and reach the remote UEs 132, 133 and 131, IAB stations 121 and 122, also referred to as IAB-nodes 121 and 122, have been installed by the operator. By acting as relaying nodes between the IAB-donor 120 and the UEs 132 and 133, IAB-nodes 121 and 122 allow overcoming the reachability issue resulting from presence of building 108, which is an obstacle to the propagation of radio waves and hence to the direct attachment and further communications between the UEs and the IAB-donor 120. This is particularly true when the communications between the IAB-donor 120 and UEs 132 and 133 are operated at millimeter wave frequencies, which are highly sensitive to shadowing phenomena.

The IAB-donor 120 also serves UE 134, which is directly connected to it.

The IAB-donor 120 and the IAB-stations 121 and 122 are thus forming a backhaul network or IAB network (also referred to as IAB topology), which accommodates UEs 132, 133, 131 and 134. The terms IAB network and IAB topology will be used interchangeably in the following.

The specification of the Integrated Access and Backhaul (IAB) is spread over several 3GPP standard documents, including:
- TS 38.300 RAN architecture (V16.2.0),
- TS 38.321 MAC protocol (V16.1.0),
- TS 38.331 Radio Resource Control (RRC) protocol (V16.1.0),
- TS 38.340 Backhaul Adaptation Protocol Layer (V16.1.0),
- TS 38.401 RAN architecture (V16.2.0),
- TS 38.473 F1 Application Protocol (V16.2.0).

As IAB-nodes 121 and 122 are respectively connected to UEs 131, 132 and 133, they are considered as Access IAB-nodes for their respectively connected UEs.

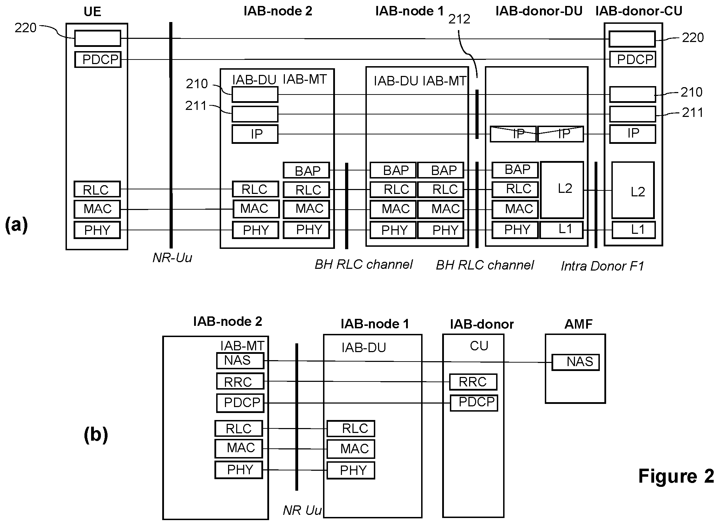

The IAB-donor 120 is a logical node that provides the NR-based wireless backhaul and consists of a central unit (CU or gNB-CU functionality) and connected donor distributed unit(s) (DU or gNB-DU functionality). The IAB-donor-CU or donor CU (also referred to in the following as IAB-donor CU or IAB donor CU) hosts higher layer protocols, such as PDCP (Packet Data Convergence Protocol) and RRC (Radio Resource Control) protocols, for controlling operation of one or more DUs and each of the one or more IAB-donor-DUs or donor DUs (also referred to in the following as IAB-donor DU or IAB donor DU) includes lower layer protocols, such as the RLC, MAC and physical layer protocols. The IAB-donor CU and IAB-donor DU may be located far from the other or may be located in the same physical device. The gNB-DU functionality is defined in 3GPP TS 38.401. It aims at terminating the NR access interface to the UEs and next-hop IAB-nodes, and at terminating the F1 protocol to the IAB-donor gNB-CU functionality as shown in Figures 2a and 2b discussed below.

The IAB nodes, which may serve multiple radio sectors, are wireless backhauled to the IAB-donor 120, via one or multiple hops. They form a directed acyclic graph (DAG) topology with the IAB-donor at its root.

The IAB nodes consist of an IAB-DU (IAB-Distributed Unit) and an IAB-MT (IAB-Mobile Termination). The gNB-DU functionality on an IAB-node is also referred to as IAB-DU and allows the downstream (toward the UE) connection to the next-hop IAB. The IAB-MT functionality includes, e.g., physical layer, layer-2, RRC and Non Access Stratum (NAS) functionalities to connect to the gNB-DU of an upstream IAB-node (including the IAB-donor 120 in which case it connects to the IAB-donor gNB-CU, hence to the core network 110, for instance for initialization, registration and configuration).

In this DAG topology, the neighbour node on the IAB-DU's interface is referred to as child node and the neighbour node on the IAB-MT's interface is referred to as parent node. The direction toward the child node is further referred to as downstream while the direction toward the parent node is referred to as upstream.

The IAB-donor 120 (e.g. the IAB-donor CU) performs centralized resource, topology and route management for the whole IAB topology. This includes configuring the IAB-nodes according to the network topology, e.g. in order to perform appropriate routing of data packets.

Figures 2a and 2b schematically illustrate stacks of some protocol layers involved into IAB operations.

F1 interface supports the exchange of signalling information between the endpoints, as well as the data transmission to the respective endpoints. From a logical standpoint, F1 interface is a point-to-point interface between the endpoints.

In 5G NR, F1-C is the functional interface in the Control Plane (CP) between the IAB-donor-CU and an IAB-node-DU. F1-U is the functional interface in the User Plane (UP) for the same units. F1-C and F1-U are shown by reference 212 in Figure 2a. In this example, F1-U and F1-C are carried over two backhaul hops (from IAB-donor to IAB-node1 and then from IAB-node1 to IAB-node2).

In the User Plane, boxes 210 at the IAB-donor CU and the IAB-node DU refer to the GTP-U layer and boxes 211 refer to the UDP layer. GTP-U stands for GPRS Tunnelling Protocol User Plane. GTP-U Tunnels are used to carry encapsulated PDUs and signalling messages between a given pair of GTP-U Tunnel Endpoints (refer to 3GPP TS 29.281 for more details), here boxes 210 at the IAB-donor CU and the IAB-node DU. The well-known User Datagram Protocol (UDP) is a transport layer protocol providing a best effort datagram service and fit to use with an IP protocol.

In the Control Plane, boxes 210 indicate the F1AP (F1 Application Protocol) layer and boxes 211 indicate the SCTP (Stream Control Transmission Protocol) layer. The F1 Application Protocol (as defined in 3GPP TS38.473 and TS 38.401) provides signalling services between the IAB-donor CU and the IAB-node DU, or UE associated services. These services are for example initialization, configuration, and so on. The well-known SCTP layer provides reliable, in sequence transport of messages with congestion control.

F1-U and F1-C rely on an IP transport layer between the IAB-donor CU and the IAB-node DU as defined in 3GPP TS 38.401.

The transport between the IAB-donor DU and the IAB-donor CU also uses an IP transport Layer over various media, like for example wires or optical fiber when the IAB-donor CU is remote from the IAB-donor DU, or locally in a virtual instantiation of the IAB-donor CU and the IAB-donor DU on the same physical machine. IAB-specific transport between IAB-donor-CU and IAB-donor-DU is specified in 3GPP TS 38.401.

L1 and L2 on the Figure stand respectively for the transport and physical layers appropriate to the medium in use.

The IP layer can also be used for non-F1 traffic, such as Operations, Administration and Maintenance traffic.

On the wireless backhaul, the IP layer is itself carried over the backhaul adaptation protocol (BAP) sublayer, which enables routing over multiple hops. The BAP sublayer is specified in TS 38.340.

The IAB-DU's IP traffic is routed over the wireless backhaul via the BAP sublayer. In a downstream direction, upper layer packets are encapsulated by the BAP sublayer at the IAB-donor DU, thus forming BAP packets or packet data units (PDUs) or data units. The BAP packets are routed by the BAP layer (and corresponding BAP entities in the IAB-DU and IAB-MT) of the intermediate IAB-nodes, if any. The BAP packets are finally de-encapsulated by the BAP sublayer at the destination IAB-node (which may be an access IAB-node should the upper layer packets in the BAP packets be intended for a UE).

In upstream direction, upper layer packets are encapsulated by the BAP sublayer at an initiator IAB-node (which may be an access IAB-node should the upper layer packets come from a UE), thus forming BAP packets or packet data units (PDUs) or data units. The BAP packets are routed by the BAP layer (and corresponding BAP entities in the IAB-DU and IAB-MT) of the intermediate IAB-nodes, if any. The BAP packets are finally de-encapsulated by the BAP sublayer at the IAB-donor DU.

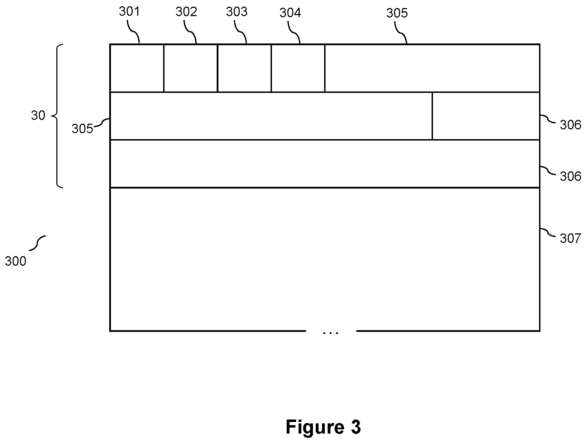

On the BAP sublayer, packets are routed based on the BAP routing ID, which is carried in the BAP header of the BAP packets, and which is set by the BAP sublayer of the emitting IAB-donor-DU or initiator IAB-node (e.g. a network node in the IAB network generating the BAP packets). Figure 3 illustrates the format of a BAP Data Protocol Data Unit (PDU) or packet. It is specified in the standardized version paragraph 6.2 of 3GPP TS38.340 release 16.1.0.

The header 30 includes of fields 301 to 306. Field 301, named D/C field, is a Boolean indicating whether the corresponding BAP packet is a BAP Data packet or a BAP Control packet. Fields 302-304 are 1-bit reserved fields, preferably set to 0 (to be ignored by the receiver).

Fields 305 and 306 indicate together the BAP routing ID for the BAP packet. BAP address field 305, also referred to as DESTINATION field, is located in the leftmost 10 bits while BAP path identity field 306, also referred to as PATH field, is located in the rightmost 10 bits.

Field 305 carries the BAP address (i.e. on the BAP sublayer) of the destination IAB-node or IAB-donor DU for the BAP packet. For the purpose of routing, each IAB-node and IAB-donor DU in an IAB network is configured (by IAB-donor CU of the IAB network) with a designated BAP address. Field 306 carries a path ID identifying the routing path the BAP packet should follow to this destination in the IAB topology. For the purpose of routing, the routing paths, including their path ID, are configured (by IAB-donor-CU of the IAB network) in the IAB-nodes.

The BAP header is added to the packet when it arrives from upper layers to the BAP layer, and it is stripped off by the BAP layer when it has reached its destination node. The selection of the packet's BAP routing ID is configured by the IAB-donor-CU.

For instance, when the BAP packet is generated by an IAB-node, i.e. either by the IAB-donor-DU for downstream transmission or by an initiator IAB-node (which may be an access IAB-node should the upper layer packets come from a UE) for upstream transmission, the BAP header with the BAP Routing ID is built by this IAB-node according to a configuration table defined in 3GPP TS 38.340. This table is called *Downlink Traffic to Routing ID Mapping Configuration* table in the IAB-donor or *Uplink Traffic to Routing ID Mapping Configuration* table in the initiator IAB-node. In intermediate IAB-nodes, the BAP header fields are already specified in the BAP packet to forward.

As mentioned above, these configuration tables defining the BAP paths (hence the routing strategy and the configuration of the IAB-nodes given the IAB network topology) are usually defined by the IAB-donor-CU and transmitted to the IAB-nodes to configure them.

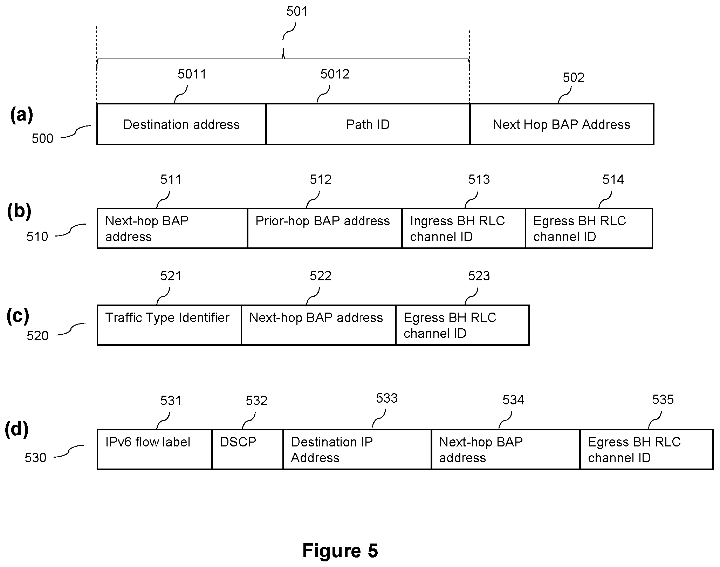

A usage of these tables to perform the routing is described below with reference to Figures 5a-5d.

To process the transport of messages over the 5G NR radio medium, three more sublayers (RLC, MAC and PHY) are implemented at each IAB-node below the BAP sublayer. The RLC (Radio Link Control) sublayer is responsible for the segmentation or reconstruction of packets. It is also responsible for requesting retransmissions of missing packets. The RLC layer is further described in TS38.322. The MAC (Media Access Channel) protocol sublayer is responsible for selecting available transmission formats for the user data and for the mapping of logical channel to the transport channels. The MAC handles also a part of the Hybrid Automated Repetition request scheme. The MAC layer is detailed in TS 38.321. On the emitter or transmitter side, the MAC encapsulates the data packet issued from the RLC. It adds a header carrying information necessary to the MAC function. On the receiver side, the MAC decapsulates the data packet issued from the PHY, deletes its header and passes the remaining data to the RLC. The PHY sublayer provides an electrical interface to the transmission medium (the air) by converting the stream of information into physical modulation signals, modulating a carrier frequency at the emitter side. At the receiver side, the PHY sublayer converts the physical modulation signals back to a stream of information. The PHY layer is described in TS 38.201, TS 38.211, TS 38.212, TS 38.213, TS 38.214.

To pass messages towards the user or control plane, two other sublayers are used in UE and IAB-donor-CU: the PDCP (Packet Data Convergence Protocol) sublayer and either the SDAP (Service Data Adaptation Protocol) sublayer for the User Plane communications or the RRC (Radio Resource Control) sublayer for the Control Plane communications.

The PDCP sublayer handles IP Header compression/decompression, ciphering/deciphering, and handles the integrity on the data packet if necessary. It mandatorily numbers the packets on the emitter side and reorders the packets on the receiver side. The PDCP sublayer is described in 3GPP TS38.323.

SDAP sublayer 220 for the User Plane handles the Quality of Service. It is described in TS38.324. On the UE side, the SDAP sublayer exchanges the payload data with the user's application (voice, video, etc... - not shown in the Figure). On the IAB-donor side, the SDAP sublayer exchanges the data with the Core Network 110 (Internet traffic, Cloud, etc..).

RRC sublayer 220 for the Control Plane handles the configuration of the protocol entities of the User Plane protocol stack. It is described in TS38.331. It is responsible for the handling of, inter alia, broadcasting information necessary to a UE to communicate with a cell; transmitting paging messages, managing connection, including setting up bearers; mobility functions; measurement configuration and reporting; devices capabilities.

The interface (for both CP and UP) between nodes using the layers PDCP, RLC, MAC and PHY is referenced NR-Uu. This mainly concerns the interface with the UE.

The interface (for both CP and UP) between nodes using the layers BAP, RLC, MAC and PHY is named BackHaul RLC Channel (BH RLC channel). This mainly concerns the interfaces between the IAB-nodes.

NR-Uu is the interface between the UE and the radio access network, i.e. its access IAB-node (for both CP and UP).

Figure 2b comes from 3GPP TS 38.300 v16.2.0 and illustrates the protocol stack for the support of IAB-MT's RRC and NAS connections. The Non-Access Stratum (NAS) protocol handles the messages between the core network and a user equipment, here an IAB-node. It manages the establishment of communication sessions and maintains communications with the user equipment as it moves. The 5G NAS is described in 3GPP TS 24.501. The 5G Core Access and Mobility Management Function (AMF) is a function within the Core Network that receives all connection and session related information from the UEs connected to the IAB node, as well as similar information for the IAB-node. AMF is only responsible for handling connection and mobility management tasks.

The IAB-MT establishes signalling Radio Bearers SRBs (bearers carrying RRC and NAS messages) with the IAB-donor-CU. These SRBs are transported between the IAB-MT and its parent node(s) over NR-Uu interface(s).

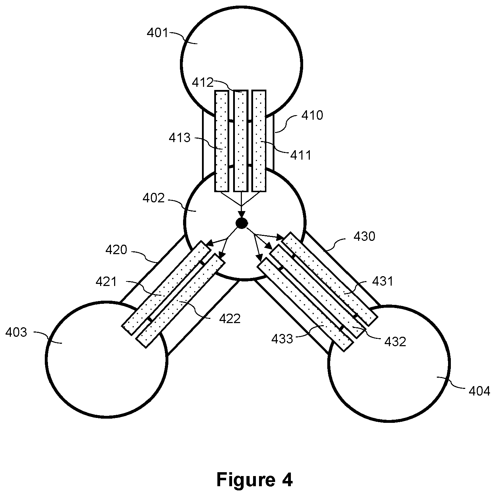

Figure 4 illustrates the routing management in an IAB network. The routing management at an IAB-node acting as relay is based on a BAP routing configuration and seeks to determine, from one BH RLC channel of an ingress link over which a BAP packet is received, one BH RLC channel of one egress link for forwarding the received BAP packet.

A BAP routing configuration may be set manually in each IAB-node of the IAB network. Preferably, the BAP routing configurations are built and can be updated over time by IAB-donor CU and transmitted by same via F1AP signaling to the IAB-nodes during their initial configurations and the life of the IAB network. As mentioned above, the BAP routing configurations may be built by IAB-donor-CU based on the IAB network topology and its evolution over time (e.g. should some radio links disappear or recover or their link quality changes).

The BAP routing configuration of the IAB-node comprises various routing tables, four of which are shown in Figures 5a-5d.

Figure 5a schematically shows an entry 500 of the *Backhaul Routing Configuration* table as defined in 3GPP TS 38.300, V16.2.0, section 6.11.3 for the BAP sublayer. It is used by the IAB-node to select the egress link to forward or transmit a BAP packet or PDU (Protocol Data Unit) to a next hop IAB-node.

Field 501 defines a BAP Routing ID (concatenation of the PATH 5012 and DESTINATION 5011 fields, corresponding to PATH field 306 and DESTINATION field 305 as defined in Figure 3) while field 502 specifies the next-hop BAP Address, i.e. the BAP address of the next IAB-node along the path corresponding to the Routing ID 501. The Next Hop BAP address 502 thus identifies an egress link to forward or transmit the BAP packet.

There may be several entries in the *Backhaul Routing Configuration* table with the same destination BAP address but with different Path IDs and next-hop BAP Addresses in the information element 502. The first entry may provide the default next-hop BAP Address corresponding to the default path to reach the destination, and the other entries with the same destination BAP address relate to back-up redundant paths to be selected when the default link is not available, e.g. because of radio link failure (RLF).

Figure 5b schematically shows an entry 510 of the *BH RLC channel mapping configuration* table as defined in 3GPP TS 38.300, section 6.11.3 and/or 3GPP TS 38.340, V16.1.0, section 5.2.1.4.1, for the BAP sublayer. It is used by the IAB-node acting as a relay (e.g. an intermediate IAB-node) to identify the Backhaul (BH) RLC channel where to forward a BAP packet or PDU over the egress link previously selected using the *Backhaul Routing Configuration* table.

Information Element (IE) 511 stores a next-hop BAP address as defined previously and usually obtained from the *Backhaul Routing Configuration* table; IE 512 stores a prior-hop BAP address, i.e. the BAP address of the previous IAB-node from which the BAP packet arrives; IE 513 specifies an ingress RLC channel ID, i.e. the identifier of an RLC channel over which the BAP packet is received; and IE 514 stores an egress RLC channel ID providing the RLC channel the IAB-node will use to forward the BAP packet.

Note that for BH RLC channels in downstream direction (parent to child direction, e.g. IAB-node 402 towards IAB-node 403 in Figure 4), the BH RLC channel ID is included in the F1AP configuration of the BH RLC channel. For BH RLC channels in upstream direction (child to parent direction, e.g. IAB-node 402 towards IAB-node 401), the BH RLC channel ID is included in the RRC configuration of the corresponding logical channel.

Figures 5c and 5d illustrates the equivalents to the *BH RLC channel mapping configuration* table for the IAB-node that does not act as intermediate IAB relaying entities. They are defined in 3GPP TS 38.340, sections 5.2.1.4.2. and section 5.2.1.4.3.

The table in Figure 5c is called *Uplink Traffic to BH RLC Channel Mapping Configuration* table, 520. It is used by an initiator IAB-node (not the IAB-donor) having built BAP packets or PDUs from BAP SDUs (Service Data Unit) received from upper layers, to identify the Backhaul (BH) RLC channel to transmit these packets in the upstream direction over the egress link previously selected using the *Backhaul Routing Configuration* table described in Figure 5a.

IE 521 specifies a Traffic Type Identifier for the SDUs received from the upper layers, IE 522 indicates a next-hop BAP address as defined previously and usually obtained from the *Backhaul Routing Configuration* table, and IE 523 specifies an egress BH RLC channel providing the RLC channel the IAB-node will use to transmit the BAP packet.

The table in Figure 5d is called *Downlink Traffic to BH RLC Channel Mapping Configuration* table 530. It is used by an IAB-donor DU having built BAP packets or PDUs from BAP SDUs (Service Data Unit) received from upper layers, to identify the Backhaul (BH) RLC channel to transmit these BAP packets in the downstream direction over the egress link previously selected using the *Backhaul Routing Configuration* table.

IE 531 is an IPv6 flow label used to classify IPv6 flows, IE 532 specifies a DSCP (Differentiated Services Code Point) usually indicated in the IPv6 header of the packets, IE 533 indicates a destination IP Address, IE 534 indicates a next-hop BAP Address as defined above, and IE 535 defines an egress BH RLC channel ID providing the RLC channel the IAB-node will use to transmit the BAP packet.

The tables of Figures 5b, 5c and 5d may be composed of several rows (entries), each row/entry including the IEs shown in the respective Figures.

Next-hop BAP address and egress link are synonymous because they each designate the same portion (radio link or backhaul link) of the IAB network between the current IAB-node and the next IAB-node having the next-hop BAP address. Consequently, with respect to 3GPP release 16 for 5G NR, they can be used interchangeably to designate such IAB network radio or backhaul link.

As a result of all the tables configured in the IAB-nodes and more particularly the Routing IDs of IEs 501, multiple BAP paths are defined through multiple IAB-nodes.

Back to Figure 4, the routing of a BAP packet by the BAP sublayer of IAB-node 402 uses the BAP routing ID 305+306 of a BAP packet. The BAP address (DESTINATION path 305) is used for the purpose of:
1) determining whether the BAP packet has reached the destination node, i.e. IAB-node or IAB-donor DU, on BAP sublayer. The BAP packet has reached its destination node if the BAP address 305 in the packet's BAP header matches the BAP address configured either via RRC on the IAB-node or via F1AP on the IAB-donor DU.
2) determining the next-hop IAB-node for the BAP packet that has not reached its destination. This applies to BAP packets arriving from a prior-hop IAB-node over the BAP sublayer or that have been received from upper layers.

For packets arriving from a prior-hop IAB-node or from upper layers, the determination of the next-hop IBA-node is based on the *Backhaul Routing Configuration* table 500.

The IAB-node 402 resolves the next-hop BAP address 502 to a physical backhaul link, being either link 420 or link 430. To that end, it seeks the entry in the table having field 501 matching the BAP Routing ID 305+306 of the BAP packet. Corresponding field 502 provides the next-hop BAP address.

The *Backhaul Routing Configuration* table may have multiple entries 500 with different BAP Routing IDs but with the same destination BAP address (meaning the BAP Path IDs are different). These entries may correspond to the same or different egress BH links. In case, the BH link matching the BAP Routing ID of the BAP packet experiences a radio link failure (RLF), typically the IAB-node may select another egress BH link (next-hop BAP address) based on routing entries with the same destination BAP address, i.e. by disregarding the BAP path ID. In this manner, a BAP packet can be delivered via an alternative path in case the indicated path is not available.

For instance, in case BH link 420 experiences a radio link failure, IAB-node 402 may select another BAP routing ID having the same destination BAP address but involving BH link 430 instead.

Next, the IAB-node 402 derives the egress BH RLC channel of the selected egress BH link, over which the BAP packet is to be transmitted or forwarded. To that end, the IAB-node 402 uses the *BH RLC channel mapping configuration* table or *Uplink Traffic to BH RLC Channel Mapping Configuration* table or *Downlink Traffic to BH RLC Channel Mapping Configuration* table depending on its role (intermediate or relay IAB-node, initiator IAB-node or IAB-donor transmitting in uplink/upstream or downlink/downstream direction)

For instance, for an intermediate or relay IAB-node, IEs 511, 512, 513 are the inputs and IE 514 is the output of the BH RLC channel look-up process: IAB-node 402 routes the incoming BAP packets received from the ingress BH RLC channel ID 513, belonging to the ingress BH link identified by the prior-hop BAP address 512, to the egress BH RLC channel ID 514, belonging to the egress BH link previously selected and now identified by the next-hop BAP address 511.

For an initiator IAB-node wishing to transmit a BAP packet in upstream direction to the IAB-donor, IEs 521, 522 are the inputs and IE 523 is the output of the BH RLC channel look-up process: the IAB-node 402 selects the egress BH RLC Channel 523 corresponding to the table entry 520 where the Traffic Type Identifier 521 matches the traffic type of the original BAP SDU, and where the next-hop BAP address 522 matches the next-hop BAP address previously selected with the *Backhaul Routing Configuration* table. This applies for BAP SDUs in the control plane (non F1-U packets), as well as for BAP SDUs in the user plane (F1-U packets). The Traffic Type Identifier 521 shall correspond to the destination IP address and TEID (Tunnel End Point Identifier) of the BAP SDUs.

For the IAB-donor DU wishing to transmit a BAP packet in the downstream direction to a destination IAB-node or an UE, IEs 531, 532, 533, 534 are the inputs and IE 535 is the output of the BH RLC channel look-up process: the IAB-donor DU selects the egress BH RLC Channel 535 corresponding to the table entry 530 matching the Destination IP address 533, the IPv6 Flow Label 531 (only for BAP SDU encapsulating an IPv6 packet), and the Differentiated Services Code Point (DSCP) 532 of the original BAP SDU, and where the next-hop BAP address 534 matches the next-hop BAP address previously selected with the *Backhaul Routing Configuration* table. This applies for BAP SDUs in the control plane (non F1-U packets), as well as for BAP SDUs in the user plane (F1-U packets).

If there is no matching entry, a default BH RLC ID channel is selected.

Such routing process can be implemented in the various IAB-nodes of an IAB network.

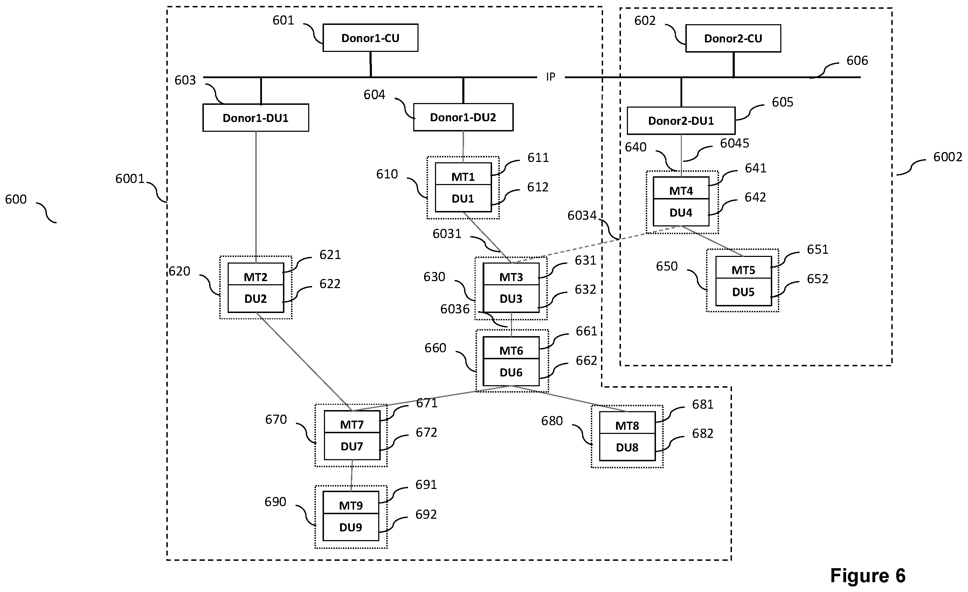

Figure 6 illustrates an example of an IAB communication system (or IAB network system) 600 in which embodiments and examples of embodiments of the present invention may be implemented so as to provide network path diversity through several IAB-donor-DUs and different IAB networks. In one example implementation, the BH radio links are operated over the millimeter wave frequency band (i.e. above 30 GHz), which is highly sensitive to radio channel disturbance. An IAB network will also be referred to as an IAB topology or topology and so in this application, the terms IAB network and IAB topology and topology will be used interchangeably.

IAB communication system 600 is composed of two IAB networks or IAB topologies 6001 and 6002 with each IAB topology comprising a set of IAB nodes (e.g. the set may comprise a plurality of IAB nodes or at least one IAB node) and a IAB-donor CU for controlling or managing the plurality of IAB nodes. The set of IAB nodes may include one or more IAB-nodes, such as initiator IAB-nodes which generate BAP packets and also intermediate or relay IAB-nodes. Each of the IAB nodes communicate with at least one other IAB node over a wireless backhaul (BH) link. Although Figure 6 shows two IAB topologies 6001 and 6002, the present invention is not limited to two IAB topologies 6001 and 6002 and may be implemented in an IAB communication system comprising more than two IAB topologies with each topology comprising a set of IAB nodes and a IAB donor CU as discussed above. Each of the IAB-nodes may be either fixed or mobile.

IAB topology 6001 includes IAB-donor-CU 601 (identified as Donor1-CU in Figure 6), its associated IAB-donor-DUs, IAB-donor-DU 603 (identified as Donor1-DU1 in Figure 6) and IAB-donor-DU 604 (identified as Donor1-DU2 in Figure 6), and a plurality of IAB-nodes 610, 620, 630, 660, 670, 680 and 690, similar to IAB-nodes 121 and 122.

IAB topology 6002 includes IAB-donor-CU 602 (identified as Donor2-CU in Figure 6), and its associated IAB-donor-DU 605 (identified as Donor2-DU1 in Figure 6), and a plurality of IAB-nodes 640 and 650, similar to IAB-nodes 121 and 122.

As discussed above, each IAB node comprises a Mobile Termination (MT) part or unit, controlled and configured by the IAB donor using RRC messaging as defined in 3GPP TS 38.331, and a Distributed Unit (DU) part, controlled and configured by the IAB donor using F1-AP messaging as defined in 3GPP TS 38.473. For example, IAB-node 610 comprises a MT part or unit 611 and a DU part 612.

A wired backhaul IP network interconnects the IAB-donor-CUs 601 and 602, and the IAB-donor-DUs 603, 604 and 605 through wired link 606. For instance, this wired link consists of optical fiber cable(s).

IAB-Donor-CU 601, IAB-Donor-DU 603 and 604, IAB-nodes 610, 620, 630, 660, 670, 680 and IAB-node 690 are part of the same IAB network or IAB topology 6001, which is configured and managed or controlled by IAB-Donor-CU 601.

IAB-Donor-CU 602, IAB-Donor-DU 605 and IAB-nodes 640 and 650 are part of the same IAB network or IAB topology 6002, which is configured and managed or controlled by IAB-Donor-CU 602.

IAB-node 630 is connected to the parent IAB-node 610 through BH link 6031, and to the child IAB-node 660 through BH link 6036. Although IAB-node 630 belongs to IAB network 6001, in view of its proximity to IAB network 6002 and in particular to IAB-node 640, IAB-node 630 may also be connected to IAB-node 640 (which acts as a parent node to IAB-node 630) through wireless BH link 6034. For example, when the MT part or unit 631 of IAB-node 630 is initially connecting to the network, it will perform a cell search procedure, as defined in 3GPP TS 38.300, trying to detect PSS (Primary Synchronization Signal) and SSS (Secondary Synchronization Signal). Based on the System information it will receive, the MT part or unit 631 of IAB-node 630 will determine if it can connect to a new cell, i.e. a new IAB-node, such as IAB-node 640. If it succeeds to establish connectivity with IAB-node 640, IAB-node 630 may notify its IAB-donor CU 601 that it has established dual connectivity with an IAB-node that belongs to a neighbor IAB topology or network 6002 (for example, by sending a DUAL CU CONNECTION NOTIFICATION message). As IAB-node 630, even though belonging to IAB network 6001, is also connected to IAB-node 640, which belongs to IAB network 6002, it may be referred to as a boundary node between IAB network 6001 and IAB network 6002. As IAB-node or boundary node 630 is part of the IAB network 6001, it is controlled (e.g. configured and managed) by the IAB-Donor-CU 601 of IAB network 6001. For example, the IAB-Donor-CU 601 configures the boundary node 630 with configuration information during initial configurations and overtime to account for any changes/updates in the configurations/topologies of the IAB network 6001 (and also IAB network 6002 which may impact the configuration of boundary node 630). In one embodiment of the invention, IAB-node 630 is assigned two BAP addresses by IAB-donor-CU 601: one BAP address for IAB network 6001 and one for IAB network 6002.

The IAB-donor CU 601 may take benefit of the dual connectivity of IAB-node 630 between IAB topology 6001 and IAB topology 6002 to balance the traffic load in IAB topology 6001 by offloading, or migrating, some traffic (data/user traffic or control traffic) initially planned to be routed through BH link 6031, over BH links 6045 and 6034.

BH link or BH radio link 6031 may also experience radio link deficiency due to some unexpected interference or shadowing phenomena, for example radio link failure, RLF. BH radio link 6031 may also experience congestion at IAB-node 630.

For such reasons, the IAB-node 630 may try to join the IAB topology 6002 managed by IAB-donor CU 602 and migrate to the IAB topology 6002 (i.e. IAB-node 630 may initiate the process of leaving the IAB topology 6001 and become part of the IAB topology 6002 using the RRC re-establishment defined in section 5.3.7 of TS 38.331). For example, IAB-node 630 may have already established a connection with a parent node, such as IAB-node 640, belonging to IAB topology 6002. However, even though it has such dual-connectivity, the IAB-node 630 still belongs to IAB donor CU 601 and topology 6001 (i.e. it is controlled and configured by IAB donor CU 601) but the IAB node 630 may request to join or migrate to topology 6002 (e.g. when the connection with its parent node in topology 6001 is in RLF or to offload traffic to reduce congestion at the IAB node 630) so as to be partially controlled or fully controlled by the donor CU 602. The migration of IAB-node 630 from topology 6001 (which will be referred to as the source IAB network or source IAB topology) to topology 6002 (which will be referred to as the target IAB network or target IAB topology) may be either partial (IAB-MT part 631 is controlled by IAB donor CU 602) or full (IAB-MT part 631 and IAB-DU part 632 are controlled by IAB donor CU 602).

In the context of a partial migration, the IAB-MT part or unit 631 of IAB-node 630 is migrated to the IAB-donor-CU 602 (which will be referred to as the target IAB-donor-CU), while the IAB-DU part 632 of IAB-node 630 still belongs to the IAB-donor-CU 601 (which will be referred to as the source IAB-donor-CU). Since partial migration allows for the IAB-MT part of unit 631 to be migrated quickly to the target IAB-donor-CU 602 and to be switched back quickly to the source IAB-donor-CU 601, partial migration can be used advantageously when circumstances requiring inter-donor migration are only temporary, such as during traffic peak hours, or when transient RLF on a BH link is detected.

In the context of a full migration, both the IAB-MT part or unit 631 and the IAB-DU part 632 of IAB-node 630 are migrated to the target IAB-donor-CU 602.

The IAB-donor CU 601 may also consider handing over IAB-node 630 and all or part of its descendent IAB-nodes (i.e. IAB-nodes 660, 670, 680 and 690) to the IAB-donor-CU 602, for bandwidth optimization or local processing load optimization purpose in the IAB topology 6001. In such a case, the source IAB-donor CU 601 may perform the full migration of IAB-node 630 and all or part of its descendent IAB-nodes (i.e. IAB-nodes 660, 670, 680 and 690) to the target IAB-donor-CU 602. Although advantages of partial migration include that it provides fast migration of one IAB-node between the source and the target topologies so as to adapt to changing radio conditions (e.g. transient RLF), the IAB-donor CU 601 may perform partial migration of IAB-node 630 for performance optimization.

The above are examples of different reasons why migration of resources, such as one or more IAB nodes and/or traffic, of the source topology 6001 to the target topology 6002 may be desirable to optimise or improve performance in the source topology 6001. However, as discussed in the introduction, when performing resource migration (also referred to as inter-donor migration or inter-donor topology adaptation), the additional traffic and/or processing to be handled by the target topology 6002 may impact the performance of the target topology 6002.

Examples of processes for migrating resources or managing the migration of resources, for example, processes for managing IAB-node and/or traffic migration (or offloading) from a source topology (or source IAB network or source IAB topology) to a target topology (or target IAB network or target IAB topology) will now be described according to some embodiments of the present invention.

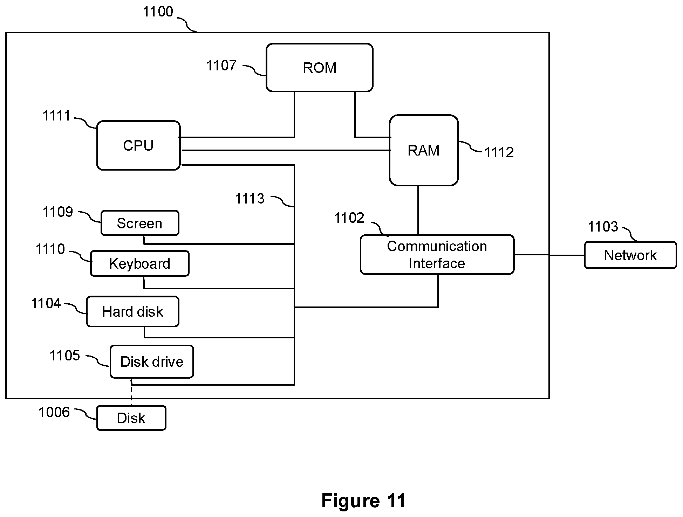

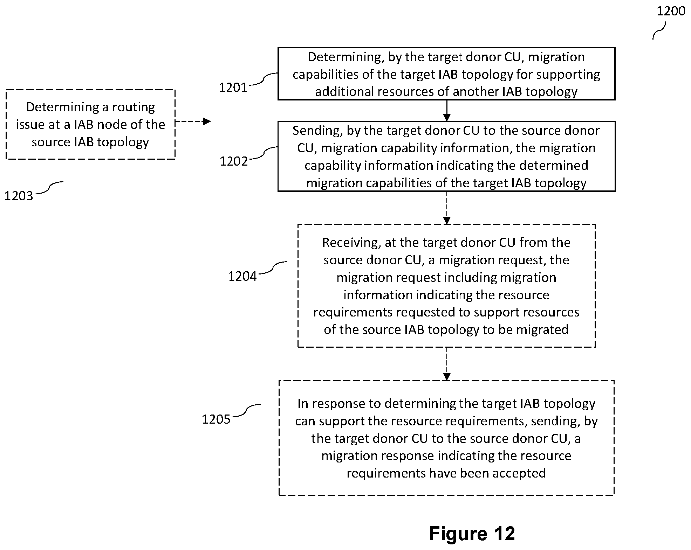

Figure 12 shows steps of an example method 1200 for use in a process, such as an inter-donor migration setup process, for migrating resources from a source IAB topology to a target IAB topology of a communication system (e.g. an IAB communication system) in accordance with an embodiment of the present invention. Each of the source IAB topology and the target IAB topology comprises a set of IAB nodes and a donor CU. The method 1200 of Figure 12 is performed at the target donor CU. For example, with reference to the IAB communication system shown in and described with respect to Figure 6, the target donor CU performing the method 1200 may be the IAB-donor-CU 602 of IAB topology 6002, with IAB topology 6002 being the target IAB topology and in this case, the source donor CU is the IAB-donor-CU 601 of IAB topology 6001, with IAB topology 6001 being the source IAB topology. Alternatively, the target donor CU performing the method 1200 may be the IAB-donor-CU 601 of IAB topology 6001, with IAB topology 6001 being the target IAB topology and in this case, the source donor CU is the IAB-donor-CU 602 of IAB topology 6002, with IAB topology 6002 being the source IAB topology. In the following, by way of example, the method 1200 of Figure 12 will be described with the target donor CU being the IAB-donor-CU 602 and the source donor CU being the IAB-donor-CU 601. The method 1200 as shown in and described with respect to Figure 12 may be performed by software elements and/or hardware elements. The target donor CU may be implemented in a communication device 1100 as shown in and described with reference to Figure 11 with the method as shown in and described with respect to Figure 12 being performed by one or more processing units, such as the central processing unit 1111.

Briefly, in step 1201, the target donor CU 602, determines migration capabilities of the target IAB topology 6002 for supporting additional resources of another IAB topology (e.g. a neighbouring IAB topology which acts as the source IAB topology). For example, target donor CU 602 determines the current constraints or resource load of the target IAB topology (e.g. current traffic load, processing load at the target donor CU 602 and at the IAB nodes 640, 650 of the target IAB topology 6002) to determine the migration capability (if any) of the target IAB topology 6002 (e.g. migration capability at the IAB nodes 640, 650 and the target donor CU 602) to support additional resources of the source IAB topology 6001. The additional resources to be supported may include one or more additional IAB nodes in addition to the set of IAB nodes of the target IAB topology, and/or additional traffic in addition to traffic of the target IAB topology. The target donor CU 602 sends, at step 1202, to the source donor CU 601 of the source IAB topology 6001, migration capability information, the migration capability information indicating the determined migration capabilities of the target IAB topology.

Since the target donor CU 602 sends the migration capability information indicating the determined migration capabilities of the target IAB topology to the source donor CU 601, the source donor CU 601 knows the migration capabilities of the target IAB topology (or in other words knows the constraints of the target IAB topology) and the source donor CU 601 can therefore use the migration capability information of the target IAB topology received from the target donor CU 602 to determine what resources of the source IAB topology 6001 it will request to be migrated. As the source donor CU 601 knows from the migration capability information what resource migration is likely to be accepted by the target donor CU 602, this can simplify the migration setup process by minimising the amount of negotiation between the source donor CU 601 and target donor CU 602 which in turn minimises processing and signalling overhead.

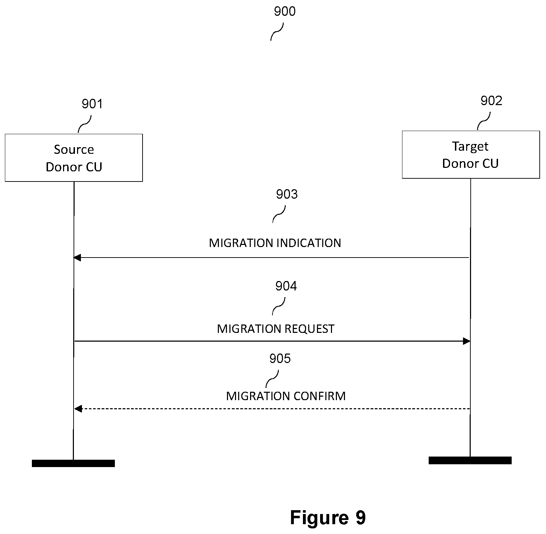

The migration capability information may include at least one of: maximum bandwidth available for supporting additional traffic; maximum number of additional IAB nodes that can be supported; maximum number of additional User Equipment, UE, that can be supported; one or more levels of Quality of Service, QoS, that can be supported. The maximum bandwidth available may be based on the maximum bandwidth available for uplink (UL) traffic and the maximum bandwidth available for downlink (DL) traffic. For example, the maximum bandwidth may include a value indicating the maximum bandwidth available for uplink (UL) traffic and a value indicating the maximum bandwidth available for downlink (DL) traffic. By including values for both UL and DL bandwidth, when determining what resources are to be migrated differences between uplink and downlink can be taken into account. This helps where UL and DL traffic allocations may significantly differ in the target topology. The one or more levels of QoS may be represented by one or more identifiers where each identifier represents a 5QI (5G QoS Identifier) value which indicates a particular set of QoS characteristics, such as priority level, packet delay or packet error rate, or may include a maximum level of QoS represented by one 5QI value (or other identifier). Details regarding 5QIs are discussed below in more detail with respect to Figure 9.

In an example implementation, the target donor CU 602 sends a migration indication message including the migration capability information. The migration indication message may comprise at least one of the Information Elements, IE, for the migration capability information as discussed below in the description of Figure 9.

In an example arrangement, the target donor CU 602 may determine a routing issue at a IAB node of the source IAB topology 6001 (step 1203 shown as an optional step in dotted lines in Figure 12). The routing issue may be a radio link failure of a BH link at the IAB node or congestion at the IAB node or any other routing issue. For example, the target donor CU 602 may receive information indicating that a IAB node of the source IAB topology 6001 has initiated a backhaul link re-establishment procedure or information indicating congestion (e.g. congestion reporting). For example, if BH link 6031 experiences radio link failure, RLF, the information received at the target donor CU 602 may be a RRC connection reestablishment request sent by the IAB node 630 (acting as a boundary IAB node) over BH links 6034 and 6045 which indicates the routing issue is RLF (e.g. as part of a RRC connection re-establishment procedure as defined in section 5.3.7 of TS 38.331). The determining of a routing issues at a IAB node of the source IAB topology 6001 (e.g. receipt of a RRC connection reestablishment request sent by a IAB node of the source IAB topology 6001) may act as a trigger for the target donor CU 602 to send the migration capability information to the source donor CU 601 and/or for the target donor CU 602 to determine the migration capabilities of the target IAB topology 6002. In response to determining there is a routing issue at a IAB node of the source IAB topology 6001, the target donor CU 602 may also send, to the source donor CU 601, a notification indicating that the IAB node of the source IAB topology has a routing issue (e.g. RLF failure and has initiated a backhaul link re-establishment procedure). The notification may be sent together with the migration capability information (e.g. in the migration indication message) or separately.

In an example, the target donor CU 602 may receive (step 1204 shown as an optional step in dotted lines in Figure 12), from the source donor CU 601, a migration request which includes migration information indicating resource requirements which are requested to support resources of the source IAB topology 6001 to be migrated to the target IAB topology 6002 based on the migration capability information sent by the target donor CU 602. In other words, the source donor CU 601 uses the migration capability information of the target IAB topology 6002 received from the target donor CU 602 to determine what resources of the source IAB topology 6001 can be migrated and the requirements the target donor CU 602 will request for the resources of the source IAB topology 6001 to be migrated and then sends the migration request to the target donor CU 602. In other words, the source donor CU 601 uses the migration capability information of the target IAB topology 6002 received from the target donor CU 602 to determine what resources of the source IAB topology 6001 can be migrated such that the resources requirements of the resources to be migrated meet the indicated migration capabilities of the target donor CU 602. The resource requirements may include network requirements or constraints (e.g. bandwidth requirements, QoS requirements) and/or processing requirements or constraints (e.g. based on the number of IAB nodes to be fully or partially migrated and/or the number of UEs to be fully or partially migrated). The target donor CU 602, may send (step 1205 shown as an optional step in dotted lines in Figure 12), to the source donor CU 601 a migration accept response indicating the resource requirements have been accepted (e.g. migration confirm response) for the resources of the source IAB topology 6001 to be migrated to the target IAB topology 6002 in response to determining the target IAB topology 6002 can support the resource requirements of the resources of the source IAB topology 6001 to be migrated (e.g. there is a match between the resource requirements needed for the resource migration from the source topology and the migration capabilities of the target topology/target donor CU). In response to receiving a migration accept response, additional steps to migrate the resources (e.g. traffic and/or IAB node(s)) from the source donor CU 601 to the target donor CU 602 are then performed.

Since the target donor CU 602 sends the migration capability information indicating the determined migration capabilities of the target IAB topology to the source donor CU 601, the source donor CU 601 knows the migration capabilities of the target IAB topology (or in other words knows the constraints of the target IAB topology) before the source donor CU 601 sends a migration request to the target donor CU 602. The source donor CU 601 can therefore use the migration capability information of the target IAB topology received from the target donor CU 602 to determine what resource requirements it will request (and hence what resources of the source IAB topology 6001 it will request to be migrated). As the source donor CU 601 knows from the migration capability information what resource migration is likely to be accepted by the target donor CU 602 before sending a migration request, the target donor CU 602 is more likely to accept the migration of the resources of the source IAB topology 6001 than reject and so the migration process can be simplified by minimising the amount of negotiation between the source donor CU 601 and target donor CU 602 which in turn minimises processing and signalling overhead.

For completeness, if the target donor CU 602 determines that the target IAB topology 6002 cannot support the resource requirements, the target donor CU 602 sends, in response to the migration request, a migration reject response indicating the resource requirements have not been accepted (e.g. migration failure response) for the resources of the source IAB topology 6001 to be migrated to the target IAB topology 6002.

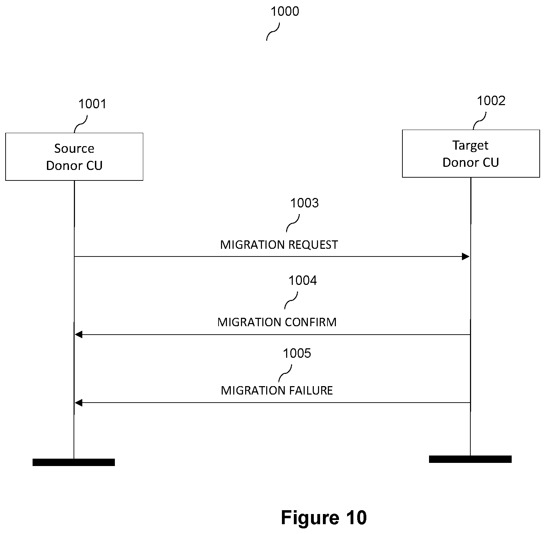

More details of the migration accept response (migration confirm response) and migration reject response (migration failure response) are given below with reference to Figure 9 and/or Figure 10.

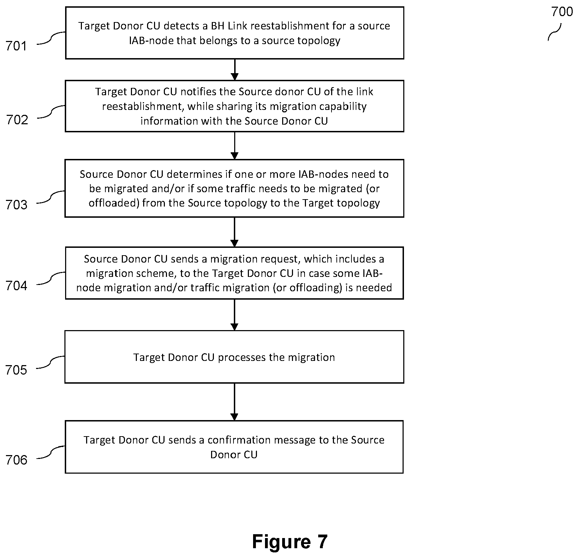

In an example implementation, the migration request received at the target donor CU 602 from the source donor CU 601 includes migration information for at least one migration scheme. For more details of the at least one migration scheme see the description below with reference to reference to Figures 7, 8, 9, 10 and 13. The migration information of a migration scheme may include resource requirements of the migration scheme, such as, network requirements or constraints (e.g. bandwidth requirements (control plane vs user plane), QoS requirements) and/or processing requirements or constraints (e.g. processing load based on the number of IAB nodes to be fully or partially migrated and/or the number of UEs to be fully or partially migrated). The migration information of a migration scheme may include at least one of: bandwidth required to support traffic to be migrated (or offloaded); number of IAB nodes of the source IAB topology to be migrated; number of User Equipment, UE, to be migrated; one or more levels of Quality of Service, QoS, required for the migration. The bandwidth required may be based on the bandwidth required for uplink (UL) traffic to be migrated and the bandwidth required for downlink (DL) traffic to be migrated. For example, the bandwidth required may include a value indicating the bandwidth required for uplink (UL) traffic and a value indicating the bandwidth required for downlink (DL) traffic. The one or more levels of QoS may be represented by one or more identifiers where each identifier represents a 5QI (5G QoS Identifier) value which indicates a particular set of QoS characteristics, such as priority level, packet delay or packet error rate, or may include a maximum level of QoS represented by one 5QI value (or other identifier). Details regarding 5QIs are discussed below in more detail with respect to Figure 9. In an example implementation, the target donor CU 602 receives a migration request message including the migration request which includes migration information for at least one migration scheme. The migration request message may comprise at least one of the Information Elements, IE, for the migration information of a migration scheme as discussed below in the description of Figure 10.

The migration request received at the target donor CU 602 from the source donor CU 601 may include migration information for each of a plurality of different migration schemes. In this case, the migration information of each migration scheme of the plurality of different migration schemes indicates resource requirements requested for the respective migration scheme to support resources of the source IAB topology 6001 to be migrated to the target IAB topology 6002. In other words, the migration information of each migration scheme indicates the resource requirements for the respective migration scheme to support resources of the source IAB topology 6001 that the source donor CU 601 requests or needs to be migrated to the target IAB topology 6002. The migration request may further include for each of the plurality of different migration schemes priority information indicating a priority of the respective migration scheme. When the migration request includes migration information for each of a plurality of different migration schemes, the target donor CU 602 sends, to the source donor CU 601, a migration accept response indicating at least one of the plurality of different migration schemes has been accepted (e.g. migration confirm response) in response to determining the target IAB topology can support the resource requirements for the at least one of the plurality of different migration schemes (e.g. there is a match between the resources requirements of at least one of the plurality of different migration schemes needed for the resource migration and the migration capabilities of the target topology/target donor CU). The migration request for each of the plurality of different migration schemes may further include a migration scheme identifier for uniquely identifying the respective migration scheme. The migration accept response indicating at least one of the migration schemes has been accepted may then include the migration scheme identifier for the at least one of the migration schemes that has been accepted. In an example, if more than one of the migration schemes has been accepted, the migration accept response may include an identifier of only one of the accepted migration schemes (e.g. the highest priority scheme of all of the accepted migration schemes as identified by priority information) or may include identifiers of each of the migration schemes that have been accepted. In an example implementation, the target donor CU 602 may send, to the source donor CU 601, a migration accept response indicating two or more of the migration schemes are acceptable (e.g. identified by identifiers of each of the acceptable migration schemes) and further indicating one of the acceptable migration schemes that the target donor CU 602 has chosen. In another example, implementation, the target donor CU 602 may send, to the source donor CU 601, a migration accept response indicating two or more of the migration schemes are acceptable (e.g. identified by identifiers of each of the acceptable migration schemes) and in response to receipt of such a migration accept response, the source donor CU 601 may then select one of the migration schemes of the acceptable migration schemes indicated in the migration accept response and send a new migration request to the target donor CU 602 which new request includes migration information for the selected one of the acceptable migration schemes and not for any of the other acceptable migration schemes. The migration accept response may be sent as a migration confirm message which may embed any one of the information elements as described below with reference to Figure 9 (or Figure 10).

As discussed above, the example method described with reference to Figure 12 simplifies a process for migrating resources (e.g. the inter-donor migration setup process) by the target donor CU sending the migration capability information indicating the determined migration capabilities of the target IAB topology to the source donor CU.

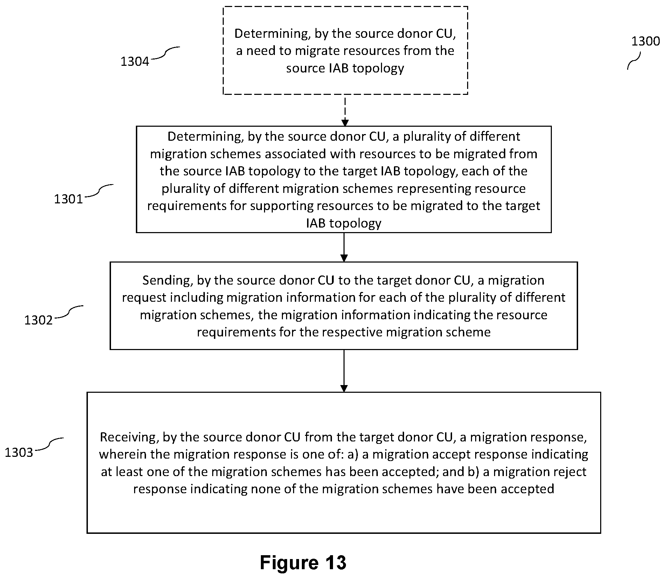

Figure 13 shows steps of another example method 1300 for use in a process, such as an inter-donor migration setup process, for migrating resources from a source IAB topology to a target IAB topology of a communication system (e.g. an IAB communication system) in accordance with an embodiment of the present invention. Each of the source IAB topology and the target IAB topology comprises a set of IAB nodes and a donor CU. The method 1300 of Figure 13 is performed at the source donor CU. For example, with reference to the IAB communication system shown in and described with respect to Figure 6, the source donor CU performing the method 1300 may be the IAB-donor-CU 601 of IAB topology 6001, with IAB topology 6001 being the source IAB topology and in this case, the target donor CU is the IAB-donor-CU 602 of IAB topology 6002, with IAB topology 6002 being the target IAB topology. Alternatively, the source donor CU performing the method 1300 may be the IAB-donor-CU 602 of IAB topology 6002, with IAB topology 6002 being the source IAB topology and in this case, the target donor CU is the IAB-donor-CU 601 of IAB topology 6001, with IAB topology 6001 being the target IAB topology. In the following, by way of example, the method 1300 of Figure 13 will be described with the source donor CU being the IAB-donor-CU 601 and the target donor CU being the IAB-donor-CU 602. The method 1300 as shown in and described with respect to Figure 13 may be performed by software elements and/or hardware elements. The source donor CU may be implemented in a communication device 1100 as shown in and described with reference to Figure 11 with the method as shown in and described with respect to Figure 13 being performed by one or more processing units, such as the central processing unit 1111.

Briefly, in step 1301, the source donor CU 601 determines a plurality (e.g. two or more) of different migration schemes associated with resources to be migrated from the source IAB topology to the target IAB topology. Each of the plurality of different migration schemes represents or indicates resource requirements for supporting the resources to be migrated (e.g. resource requirements for supporting the resources to be migrated, at least some of which are different for each migration scheme). As discussed below, the resource requirements may include network requirements or constraints (e.g. bandwidth requirements, QoS requirements), and/or processing requirements or constraints (e.g. based on the number of IAB nodes to be fully or partially migrated and/or the number of UEs to be fully or partially migrated) and/or any other requirements for supporting resources to be migrated. By determining a plurality of different migration schemes, the source donor CU 601 may determine alternative migration schemes for the resources to be migrated. For example, each of the different migration schemes have one or more different resource requirements (e.g. different level of QoS and/or different bandwidth requirements and/or different processing load requirements) and thus, provide alternative migration schemes for the resources to be migrated. By determining a plurality of different migration schemes, the source donor CU 601 increases the likelihood that the target donor CU 602 will be able to support the resource requirements of at least one of the migration schemes. This helps to reduce the amount of signalling and processing load required to negotiate resource migration between the source donor CU 601 and target donor CU 602.

The source donor CU 601 sends, at step 1302, to the target donor CU 602 of the target IAB topology 6002, a migration request including migration information for each of the plurality of different migration schemes. The migration information indicates the resource requirements for the respective migration scheme, such as, network requirements or constraints (e.g. bandwidth requirements (control plane vs user plane), QoS requirements) and/or processing requirements or constraints (e.g. processing load based on the number of IAB nodes to be fully or partially migrated and/or the number of UEs to be fully or partially migrated) for the respective migration scheme. The migration information for each of the plurality of different migration schemes may include at least one of: bandwidth required to support traffic to be migrated (or offloaded); number of IAB nodes of the source IAB topology to be migrated; number of User Equipment, UE, to be migrated; one or more levels of Quality of Service, QoS, required for the migration. The bandwidth required may be based on the bandwidth required for uplink (UL) traffic to be migrated and the bandwidth required for downlink (DL) traffic to be migrated (e.g. aggregation of the UL and DL bandwidths). The one or more levels of QoS may be represented by one or more identifiers where each identifier represents a 5QI or may include a maximum level of QoS represented by one 5QI value (or other identifier). Details regarding 5QIs are discussed below in more detail with respect to Figure 9. In an example implementation, the source donor CU 601 sends a migration request message including the migration request which includes migration information for each of the plurality of different migration schemes. The migration request message may comprise at least one of the Information Elements, IEs, for the migration information of a migration scheme as discussed below in the description of Figure 10.

The migration request may further include for each of the plurality of different migration schemes priority information indicating a priority of the respective migration scheme. The migration request for each of the plurality of different migration schemes may further include a migration scheme identifier for uniquely identifying the respective migration scheme.

At step 1303, the source donor CU 601 receives, from the target donor CU 602, a migration response. The migration response is either a migration accept response (migration confirm) indicating at least one of the migration schemes has been accepted by the target donor CU 602 (e.g. there is a match between the resources requirements needed for the resource migration from the source topology and the migration capabilities of the target topology/target donor CU or if the resources requirements needed for the resource migration meet (or can be supported by) the migration capabilities of the target topology/target donor CU), or is a migration reject response (migration failure) indicating none of the migration schemes have been accepted. The migration reject response may also include migration capability information indicating capabilities (e.g. migration capabilities) of the target IAB topology for supporting additional resources of another IAB topology. In an example, the migration reject response may also include information indicating at least one of the migration capabilities of the target topology that none of the received migration schemes could match or satisfy/meet. By including at least the migration capability information with the migration reject response, the source donor CU 601 can determine why the target donor CU 602 did not accept any of the migration schemes and from the capabilities may be able to determine a 'new' migration scheme based on the migration capability information provided by the target donor CU 602 which is more likely to be accepted by the target donor CU 602. This helps to reduce the amount of signalling and processing load required to negotiate resource migration between the source donor CU 601 and target donor CU 602.

The migration capability information may also be included in the migration accept response so as to help the source donor CU 601 understand why the target donor CU 602 accepted at least one of the migration schemes. In the event that the target donor CU 602 determines that more than one of the migration schemes have been accepted by the target donor CU 602, the target donor CU 602 may select one of the migration schemes and notify the source donor CU 601 of the selected one of the migration schemes in the migration response. The target donor CU 602 may select one of the migration schemes based on the priority information provided in the migration request for each of the plurality of different migration schemes that is acceptable (e.g. one of the acceptable migration schemes having the highest priority level).

As discussed above with reference to Figure 12, the migration capability information may include at least one of: maximum bandwidth available for supporting additional traffic; maximum number of additional IAB nodes that can be supported; maximum number of additional User Equipment, UE, that can be supported; one or more levels of Quality of Service, QoS, that can be supported. The maximum bandwidth available may be based on the maximum bandwidth available for uplink (UL) traffic and the maximum bandwidth available for downlink (DL) traffic. For example, the maximum bandwidth may include a value indicating the maximum bandwidth available for uplink (UL) traffic and a value indicating the maximum bandwidth available for downlink (DL) traffic. By including values for both UL and DL bandwidth, when determining what resources are to be migrated differences between uplink and downlink can be taken into account. This helps where UL and DL traffic allocations may significantly differ in the target topology. The one or more levels of QoS may be represented by one or more identifiers where each identifier represents a 5QI or may include a maximum level of QoS represented by one 5QI value (or other identifier). Details regarding 5QIs are discussed below in more detail with respect to Figure 10.

In an example implementation, the source donor CU 601 receives a migration response message including the migration response. The migration response message may comprise at least one of the Information Elements, IEs, for the migration capability information when included in the migration response as discussed below in the description of Figure 10.

In an example implementation, the migration accept response further includes information for identifying at least one of the migration schemes that has been accepted or each of the at least one of the migration schemes that has been accepted. For example, the migration accept response may include the migration scheme identifier to identify at least one of the migration schemes that has been accepted priority scheme of all of the accepted migration schemes or each of the at least one of the migration schemes that has been accepted. In an example implementation, the target donor CU 602 may send, to the source donor CU 601, a migration accept response indicating two or more of the migration schemes are acceptable (e.g. identified by identifiers of each of the acceptable migration schemes) and further indicating one of the acceptable migration schemes that the target donor CU 602 has chosen. In another example, implementation, the target donor CU 602 may send, to the source donor CU 601, a migration accept response indicating two or more of the migration schemes are acceptable (e.g. identified by identifiers of each of the acceptable migration schemes) and in response to receipt of such a migration accept response, the source donor CU 601 may then select one of the migration schemes of the acceptable migration schemes indicated in the migration accept response and send a new migration request to the target donor CU 602 which new request includes migration information for the selected one of the acceptable migration schemes and not for any of the other acceptable migration schemes. The migration accept response may be sent as a migration confirm message which may embed any one of the information elements as described below with reference to Figure 10 for each of the acceptable migration schemes.

The method 1300 may further comprise the source donor CU 601 determining (step 1304 shown as an optional step in dotted lines in Figure 13) a need to migrate resources from the source IAB topology 6001 and in response to determining a need to migrate resources, the source donor CU 601 then performs the determining step of 1301. For example, the source donor CU 601 may receive a notification from the target donor CU 602 indicating that there is a routing issue at a IAB node of the source IAB topology 6001 that requires resources to be migrated to the target donor CU 602. The receipt of the notification triggers the source donor CU 601 to determine a plurality of different migration schemes as set out with respect to step 1301. The routing issue may be a radio link failure of a BH link at the IAB node or congestion at the IAB node or any other routing issue. As discussed above, in an example, the target donor CU 602 may receive information indicating that a IAB node of the source IAB topology 6001 has initiated a backhaul link re-establishment procedure or information indicating congestion (e.g. congestion reporting). For example, if BH link 6031 experiences radio link failure, RLF, the information received at the target donor CU 602 may be a RRC connection reestablishment request sent by the IAB node 630 (acting as a boundary IAB node) over BH links 6034 and 6045 which indicates the routing issue is RLF. The target donor CU 602 may then send a notification to the source donor CU 601 to indicate the IAB node 630 of the source IAB topology 6001 has sent a RRC connection reestablishment request. The notification sent by the target donor CU 602 may also include migration capability information indicating migration capabilities of the target IAB topology (for example, as sent in the migration indication message). In an alternative example, the source donor CU 601 may receive, from the target donor CU 602, a migration indication message including migration capability information (as discussed above) and based on migration capability information provided, the source donor CU 601 may determine there is a need to migrate resources from the source IAB topology 6001.

In an example implementation, the source donor CU 601 may determine at least one migration scheme associated with resources to be migrated from the source IAB topology to the target IAB topology, with each of the at least one migration scheme representing or indicating resource requirements for supporting the resources to be migrated (e.g. resource requirements for supporting the resources to be migrated as discussed above with respect to Figure 12 and Figure 13). The source donor CU 601 may send, to the target donor CU 602, a migration request including migration information for the at least one migration scheme and may receive, from the target donor CU 602, a migration response as discussed above with respect to Figure 12 and Figure 13. The migration reject response may include migration capability information indicating capabilities (e.g. migration capabilities) of the target IAB topology for supporting additional resources of another IAB topology.

Referring now also to Figure 7 which illustrates, using a flowchart 700, an example method including operations at IAB donor CUs of an IAB communication system for managing inter-topology migration (such as managing IAB-node and/or traffic migration (or offloading)) from a source topology to a target topology according to some embodiments of the present invention. As with the method described above with respect to Figure 12, with the example method of Figure 7, the target donor CU provides migration capability information to the source donor CU which then sends a migration request based on the migration capability information. The method of figure 7 will be described with reference to the IAB communication system of Figure 6. In the following, by way of example, the method of Figure 7 will be described with the target donor CU being the IAB-donor-CU 602 such that the target IAB topology is therefore the IAB topology 6002 and with the source donor CU being the IAB-donor-CU 601 such that the source IAB topology is therefore the IAB topology 6001. The method as shown in and described with respect to Figure 7 may be performed by software elements and/or hardware elements. Each of the donor CUs may be implemented in a communication device 1100 as shown in and described with reference to Figure 11.

The process starts at step 701 where a target donor CU detects a routing issue, such as a BH Link reestablishment, for a source IAB-node that belongs to a source topology. For instance, IAB-node 630, upon detection of a Radio Link Failure (RLF) on BH link 6031 may try to join the IAB topology 6002 managed by IAB-donor CU 602 and migrate to the IAB topology 6002 (i.e. IAB-node 630 may initiate the process of leaving the IAB topology 6001 and become part of the IAB topology 6002 using the RRC re-establishment defined in section 5.3.7 of TS 38.331).

Upon detection of such migration attempt from said IAB-node (e.g. routing issue at the IAB-node 630), the target donor CU 602 may notify at step 702, the migration attempt detected at step 701, to the source donor CU by sending a migration indication message 903, which may embed one or more information elements (IEs) carrying migration capability information of the target donor CU, as discussed with reference to Figures 9 and 12.

Upon reception of the migration indication message 903, the source donor CU 601 determines at step 703 if one or more IAB-nodes from its source topology 6001 may need to be migrated and/or if some traffic needs to be migrated (or offloaded) from the source topology 6001 to the target topology 6002. In other words, the source donor CU 601 determines whether resources (e.g. one or more IAB-nodes and some traffic) of the source topology 6001 are needed or required to be migrated to the target topology 6002.

According to an example implementation, the source donor CU 601 selects the IAB-node(s) and/or traffic to be migrated so that the associated network and processing constraints or resource requirements associated to the migration of the selected IAB-node(s) and/or traffic matches or at least can be supported by the capabilities (e.g. migration capabilities) of the target donor CU 602 as indicated by the migration capability information received at step 702 in the migration indication message 903. The network and processing constraints or resource requirements associated with the set of IAB-node(s) and/or traffic selected for migration by the source donor CU 601, which constraints or resource requirements may include network requirements or constraints (e.g. bandwidth requirements, QoS requirements) and/or processing requirements or constraints (e.g. based on the number of IAB nodes to be fully or partially migrated and/or the number of UEs to be fully or partially migrated) are referred to as migration constraints and which may further be referred to as a migration scheme.

At step 704, the source donor CU 601 sends a migration request message 904, which includes the migration scheme determined at step 703, to the target donor CU 602 in case some IAB-node migration and/or traffic migration (or offloading) is needed.

According to an example arrangement, in case the source donor CU 601 did not manage to determine any migration scheme that would meet (e.g. would be supported by) the constraints imposed by the capabilities of the target donor CU 602, the source donor CU 601 may not send any migration request message.

According to another example arrangement, in case the source donor CU 601 did not manage to determine any migration scheme that would meet (e.g. would be supported by) the constraints imposed by the capabilities of the target donor CU 602, the source donor CU 601 may send a migration request message that does not embed any migration scheme but rather indicates that no migration is requested.

According to another example arrangement, in case the source donor CU 601 did not manage to determine any migration scheme that would meet (e.g. would be supported by) the constraints imposed by the capabilities of the target donor CU 602, the source donor CU 601 may indicate in the migration request message the one or more limitations in the capabilities of the target donor CU 602 that prevented the source donor CU 601 determining a migration scheme that matches or at least can be supported by the capabilities of the target donor CU 602. In other words, the one or more limitations in the capabilities of the target donor CU 602 that prevented the source donor CU 601 being able to select the IAB-node(s) and/or traffic to be migrated so that the associated network and processing constraints or resource requirements associated to the migration of the selected IAB-node(s) and/or traffic matches or at least can be supported by the capabilities of the target donor CU 602.

At step 705, the target donor CU 602 processes the received migration request message 904 and manages the IAB-node(s) migration according to the migration scheme (if any) embedded in the migration request message 904.

In an example implementation, the target donor CU 602 may send, at step 706, a migration accept/confirm message 905 to the source donor CU 601 to indicate that it is processing some IAB-node(s) and/or traffic migration.

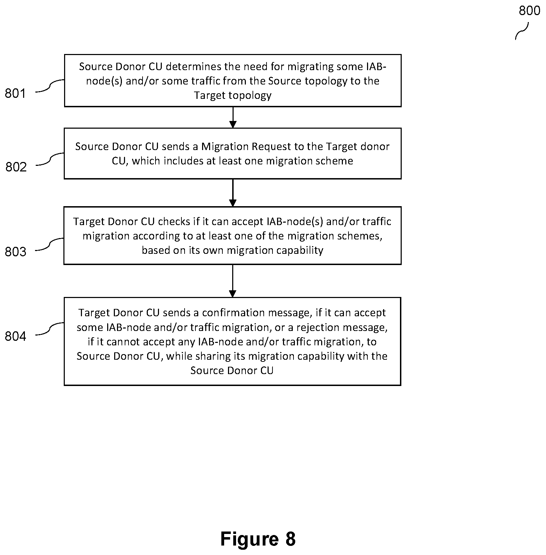

Referring now also to Figure 8 which illustrates, using a flowchart 800, an example method including operations at IAB donor CUs of an IAB communication system for managing inter-topology migration (such as managing IAB-node and/or traffic migration (or offloading)) from a source topology to a target topology according to some embodiments of the present invention. As with the method described above with respect to Figure 13, with the example method of Figure 8, the source donor CU determines at least one migration scheme associated with resources to be migrated from the source IAB topology to the target IAB topology. The method of figure 8 will be described with reference to the IAB communication system of Figure 6. In the following, by way of example, the method of Figure 8 will be described with the target donor CU being the IAB-donor-CU 602 such that the target IAB topology is therefore the IAB topology 6002 and with the source donor CU being the IAB-donor-CU 601 such that the source IAB topology is therefore the IAB topology 6001. The method as shown in and described with respect to Figure 8 may be performed by software elements and/or hardware elements. Each of the donor CUs may be implemented in a communication device 1100 as shown in and described with reference to Figure 11.

The process starts at step 801 where a source donor CU determines the need for migrating some IAB-node(s) and/or some traffic from the source topology to the target topology.

For instance, source donor CU 601 may take the opportunity of IAB-node 630 having dual-connectivity with IAB-node 610, which belongs to source topology 6001, and IAB-node 640, which belongs to target topology 6002, to offload some traffic through the target topology 6002, for instance using BH links 6045 and 6034.

As another example, the source donor CU 601 may wish to hand over IAB-nodes 630, 660 and 680 to target donor CU 602, by performing either partial or full IAB-node migration, so as to release network constraints (e.g. bandwidth overload, congestion) or local processing constraints resulting from the management of an excessive number of IAB-nodes and/or UEs connected to these IAB-nodes.

The source donor CU 601 may select one or more sets of IAB-node(s) to be migrated and/or traffic to be migrated (or offloaded). The network and processing constraints or resource requirements associated with the set of IAB-node(s) and/or traffic selected for migration by the source donor CU 601, which constraints or resource requirements may include network requirements or constraints (e.g. bandwidth requirements, QoS requirements) and/or processing requirements or constraints (e.g. based on the number of IAB nodes to be fully or partially migrated and/or the number of UEs to be fully or partially migrated) are referred to as migration constraints and which may further be referred to as a migration scheme. Thus, the source donor CU 601 may determine several alternative migration schemes associated with the set of IAB-node(s) and/or traffic selected for migration (e.g. associated with the resources to be migrated). Each of the alternative migration schemes has different network and/or processing constraints or resource requirements (e.g. different migration constraints). According to an aspect of the invention, the source donor CU 601 may assign a priority level to each of the several alternative migration schemes it has determined at step 801.

Then, at step 802, the source donor CU 601 sends a migration request message 1003 to the target donor CU 602, which includes one or more information elements (IEs) carrying the one or more migration schemes it has determined at step 801 as discussed with reference to Figures 10 and 13.

Upon reception of the migration request message 1003, the target donor CU 602 checks, at step 803, for each of the migration schemes embedded in the received migration request message 1003 if the associated migration constraints meet (or can be supported by) the migration capabilities of the target donor CU 602, as defined in Figure 10.

Then the target donor CU 602 selects one migration scheme it can accept amongst those that meet its migration capabilities, if any. According to an example, the target donor CU 602 selects the migration scheme of the migration schemes it can accept having the highest priority level assigned by the source donor CU 601 at step 801.

At step 804, the target donor CU 602 sends a migration accept/confirm message 1004, if it can accept at least one migration scheme amongst those received in the migration request message 1003, or a migration reject/failure message 1005, if it cannot accept any of the migration schemes received in the migration request message 1003.

According to an example arrangement, the migration accept/confirm message 1004 or the migration reject/failure message 1005 may embed one or more information elements (IEs) carrying the migration capabilities of the target donor CU 602, as defined in Figure 9. This would allow the source donor CU 601 to select a relevant migration scheme for a future migration request.

Figure 9 is a schematic and simplified diagram illustrating an example message flow for managing inter-topology conditional migration between a plurality of IAB networks, or IAB topologies, according to some embodiments of the invention.

According to an example arrangement, the target donor CU 902 (which may correspond to target donor CU 602 of Figure 6 as described above with respect to Figure 7) may detect a BH Link reestablishment attempt from a source IAB-node that belongs to a source topology (which may correspond to source topology 6001 of Figure 6 as described above with respect to Figure 7), as described above with reference to Figure 7 (and Figure 12), and notify it to the corresponding source donor CU 901 (which may correspond to source donor CU 601 of Figure 6 as described above with respect to Figure 7) by sending a migration indication message 903, which may embed one or more information elements (IEs) carrying the target donor CU's migration capabilities.

In an example, the target donor CU's migration capabilities may comprise any one of the following information elements or any combination thereof (e.g. the migration indication message 903 may include at least one of the following information elements for the migration capability information):
- The maximum additional Uplink (UL) bandwidth load the target topology can accommodate for UL communication offload (e.g. a maximum offload uplink aggregate bandwidth for supporting additional uplink traffic);
- The maximum additional Downlink (DL) bandwidth load the target topology can accommodate for DL communication offload (e.g. a maximum offload downlink aggregate bandwidth for supporting additional downlink traffic);
- The maximum number of additional migrated IAB-nodes the target donor CU can manage (e.g. a maximum number of additional IAB nodes that can be supported). In an example implementation, this includes the maximum number of additional IAB-nodes to be partially migrated and/or the maximum number of additional IAB-nodes to be fully migrated;
- The maximum number of additional User Equipment (UE) the target donor CU can manage (e.g. configuration, scheduling, tree topology management ...). In other words, maximum number of additional User Equipment, UE, that can be supported;
- Information on the QoS levels the target IAB donor CU can handle (e.g. an IE indicating one or more levels of Quality of Service, QoS, that can be supported). In an example, this refers to a list of supported QoS levels (for instance a list of 5QI, as defined by 3GPP TS 23.501) or a list of non-supported QoS levels (for instance a list of 5QI, as defined by 3GPP TS 23.501). In another example, this refers to a maximum level of supported QoS, like for instance a 5QI information as defined in 3GPP TS 23.501.

The migration indication message 903 may further include some information associated to the one or more IAB-node(s) belonging to the source topology that is attempting to perform BH Link reestablishment to the target topology. For example, the migration indication message 903 may further include information indicating that one or more IAB node(s) of the source topology has a routing issue, such as RLF and is attempting to perform BH link reestablishment.

According to an example, the migration indication message 903 is the RETRIEVE UE CONTEXT REQUEST message defined in 3GPP TS 38.423.

Following the reception of a migration indication message 903, the source donor CU 901 may determine a migration scheme that meets the capabilities of the target donor CU 902, as explained above with reference to Figure 7 (and Figure 12). The source donor CU 901 may then send a migration request message 904 to the target donor CU 902, which embeds one or more migration scheme information elements (IEs) (e.g. one or more IEs for the migration information of a migration scheme).

In an example, a migration scheme information element (IE) comprises any one of the following information elements or any combination thereof (e.g. the migration request message 904 may include at least one of the following information elements for the migration information of a migration scheme):
- The maximum additional Uplink (UL) bandwidth load the source donor CU 901 is requesting to offload to the target topology for UL communication (e.g. a maximum uplink bandwidth required for uplink traffic to be migrated/offloaded);
- The maximum additional Downlink (DL) bandwidth load the source donor CU 901 is requesting to offload to the target topology for DL communication (e.g. a maximum downlink bandwidth required for downlink traffic to be migrated/offloaded);
- The number of IAB-nodes the source donor CU is requesting to migrate to the target topology. In an example, this includes the number of IAB-nodes to be partially migrated and/or the number of IAB-nodes to be fully migrated to the target topology;
- The number of User Equipment (UE) associated to each of the IAB-nodes which are requested to be migrated;
- Information on the QoS levels associated to the traffic that is to be offloaded to the target topology (e.g. one or more levels of Quality of Service, QoS, required for migration). In an example, this refers to a list of QoS levels (for instance a list of 5QI, as defined by 3GPP TS 23.501). In another example, this refers to a maximum QoS level, like for instance a 5QI information as defined in 3GPP TS 23.501.

According to an example, the migration request message 904 is the RETRIEVE UE CONTEXT RESPONSE message defined in 3GPP TS 38.423.

Following the reception of a migration request message 904, the target donor CU 902 may send a migration confirm (or accept) message 905 to the source donor CU 901. According to an example, a migration confirm message 905 embeds any one of the following information elements or any combination thereof (e.g. the migration response message 905 indicating a migration scheme/resource requirements has been accepted may include at least one of the following information elements):
- A confirmation status that indicates that the migration scheme requested in the migration request message 904 is accepted by the target donor CU 902.
- A migration scheme identifier, which uniquely identifies the migration scheme;
- Migration information of the migration scheme (e.g. one or more of the IEs identified above with respect to the migration scheme information element (IE)).

After completion of the procedure (e.g. after the sending of the migration confirm message 905 and after the resources have been migrated according to the migration confirm message 905), the radio conditions or the resources consumption may change for the target donor CU, and in response to the change, the target donor CU may send to the source donor-CU a new message to initiate again a new negotiation for migrating resources. For example, the new message may be the migration indication message 903 indicating migration capability information for the new migration capabilities of the target donor CU based on the changed conditions. The new migration indication message 903 may be the RETRIEVE UE CONTEXT REQUEST message or a new message, such as the S-NODE MODIFICATION REQUIRED message or the S-NODE CHANGE REQUIRED message, both defined in 3GPP TS 38.423. The source donor-CU may send a new message to the target donor CU 902 in response. For example, the new message may be the migration request message 904 indicating migration information. The new migration request message 904 may be the RETRIEVE UE CONTEXT RESPONSE message or a new message such as the S-NODE MODIFICATION CONFIRM message, the S-NODE MODIFICATION REFUSE message, the S-NODE CHANGE CONFIRM message, or the S-NODE CHANGE REFUSE message, all defined in 3GPP TS 38.423.

Figure 10 is a schematic and simplified diagram illustrating an example message flow for managing inter-topology conditional migration between a plurality of IAB networks, or IAB topologies, according to some embodiments of the invention.

According to an example arrangement, the source donor CU 1001 (which may correspond to source donor CU 601) may request the migration of one or more IAB nodes and/ or the migration, or offload, of some traffic to the target topology (which may correspond to target topology 6002 of Figure 6) managed by the target donor CU 1002 (which may correspond to target donor CU 602 of Figure 6), as discussed in Figure 8 (and Figure 13).

In this respect, the source donor CU 1001 may determine one or more migration schemes associated with the set of IAB-node(s) and/or traffic selected for migration (e.g. associated with the resources to be migrated), as explained with reference to Figure 8 (and Figure 13). The source donor CU 1001 may then send a migration request message 1003 to the target donor CU 1002, which embeds a migration scheme information element for each of the migration schemes determined by the source donor CU 1002.

In an example, a migration scheme information element (IE) comprises any one of the following information elements or any combination thereof (e.g. the migration request message 1003 may include at least one of the following information elements for the migration information of each of the migration schemes):
- A priority level associated to the migration scheme (e.g. priority information for indicating a priority of the respective migration scheme);
- A migration scheme identifier, which uniquely identifies the migration scheme;
- The maximum additional Uplink (UL) bandwidth load the source donor CU is requesting to offload to the target topology for UL communication (e.g. a maximum uplink bandwidth required for uplink traffic to be migrated/offloaded);
- The maximum additional Downlink (DL) bandwidth load the source donor CU is requesting to offload to the target topology for DL communication (e.g. a maximum downlink bandwidth required for downlink traffic to be migrated/offloaded);
- The number of IAB-nodes the source donor CU is requesting to migrate to the target topology. In an example, this includes the number of IAB-nodes to be partially migrated and/or the number of IAB-nodes to be fully migrated to the target topology;
- The number of User Equipment (UE) associated to each of the IAB-nodes which are requested to be migrated;
- Information on the QoS levels associated to the traffic that is to be offloaded to the target topology. In an example, this refers to a list of QoS levels (for instance a list of 5QI, as defined by 3GPP TS 23.501). In another example, this refers to a maximum supported level of QoS, like for instance a 5QI information as defined in 3GPP TS 23.501.

According to an example, the migration request message 1003 is the HANDOVER REQUEST message defined in 3GPP TS 38.413.

According to an example, in case of topology redundancy without IAB-node migration (only traffic offloading), the migration request message 1003 is the S-NODE ADDITION REQUEST message, or the S-NODE MODIFICATION REQUEST message, both defined in 3GPP TS 38.423.

Following the reception of a migration request message 1003, the target donor CU 1002 may check if one or more of the migrations schemes present in the migration request message 1003 are matching its migration capabilities (for example, as discussed above with reference to Figure 8 and Figure 13).

If the target donor CU 1002 can accept at least one migration scheme amongst those received in the migration request message 1003, the target donor CU 1002 may send a migration confirm (or accept) message 1004 to the source donor CU 1001.

If the target donor CU 1002 cannot find any migrations scheme that is matching its migration capabilities, it may send a migration failure (or reject) message 1005 to the source donor CU 1001.

According to an example, a migration confirm message 1004 embeds any one of the following information elements or any combination thereof (e.g. the migration confirm message 1004 indicating at least one migration scheme/resource requirements has been accepted may include at least one of the following information elements):
- A migration confirmation status that indicates that one of the migration schemes requested in the migration request message 1003 is accepted by the target donor CU 1002;
- The identifier of the migration scheme accepted by the target donor CU 1002;
- Identifiers of all of the acceptable migration schemes;
- The migration scheme information element accepted by the target donor CU 1002 (e.g. the IE for the migration information of the accepted migration scheme);
- The target donor CU's migration capabilities.

According to an example, a migration failure message 1005 embeds any one of the following information elements or any combination thereof (e.g. the migration failure message 1005 indicating none of the migration schemes have been accepted may include at least one of the following information elements):
- A migration rejection status that indicates that none of the migration schemes requested in the migration request message 1003 is accepted by the target donor CU 1002;
- The target donor CU's migration capabilities;
- A list comprising at least one of the target donor CU's migration capabilities that none of the received migration schemes could match (or satisfy or meet). In other words, the IE identifies at least one of the target donor CU's migration capabilities with which all of the migration schemes are incompatible.

In an example, the target donor CU's migration capabilities present in the migration confirm message 1004 or in the migration failure message 1005 may comprise any one of the following information elements or any combination thereof (e.g. the migration confirm message 1004 or the migration failure message 1005 may include at least one of the following information elements for the migration capability information):
- The maximum additional Uplink (UL) bandwidth load the target topology can accommodate for UL communication offload (e.g. a maximum offload uplink aggregate bandwidth for supporting additional uplink traffic);
- The maximum additional Downlink (DL) bandwidth load the target topology can accommodate for DL communication offload (e.g. a maximum offload downlink aggregate bandwidth for supporting additional downlink traffic);
- The maximum number of additional migrated IAB-nodes the target donor CU can manage (e.g. a maximum number of additional IAB nodes that can be supported). In an example implementation, this includes the maximum number of additional IAB-nodes to be partially migrated and/or the maximum number of additional IAB-nodes to be fully migrated;
- The maximum number of additional User Equipment (UE) the target donor CU can manage (e.g. configuration, scheduling, tree topology management ...). In other words, maximum number of additional User Equipment, UE, that can be supported;
- Information on the QoS levels the target IAB donor CU can handle (e.g. an IE one or more levels of Quality of Service, QoS, that can be supported). an example, this refers to a list of supported QoS levels (for instance a list of 5QI, as defined by 3GPP TS 23.501) or a list of non-supported QoS levels (for instance a list of 5QI, as defined by 3GPP TS 23.501). In another example, this refers to a maximum supported level of QoS, like for instance a 5QI information as defined in 3GPP TS 23.501.

According to an example, the migration confirm message 1004 is the HANDOVER REQUEST ACKNOWLEDGE message defined in 3GPP TS 38.413.

According to an example, the migration failure message 1005 is the HANDOVER FAILURE message defined in 3GPP TS 38.413.

According to another example, the migration confirm message 1004 is the S-NODE ADDITION REQUEST ACKNOWLEDGE message or the S-NODE MODIFICATION REQUEST ACKNOWLEDGE message, both defined in 3GPP TS 38.423.

According to another, the migration failure message 1005 is the S-NODE MODIFICATION REQUEST REJECT message or the S-NODE ADDITION REQUEST REJECT message, both defined in 3GPP TS 38.423.

After completion of the procedure (e.g. after the sending of the migration confirm message 1004 and after the resources have been migrated according to the migration confirm message 1004 or after sending the migration failure message 1005), the radio conditions or the resources consumption may change for the source donor CU and in response to the change, the source donor CU may send to the target donor-CU a new message to initiate again a new negotiation for migrating resources. For example, the new message may be the migration request message 1003 indicating one or more new migration schemes based on the changed conditions. The new migration request message 1003 may be the HANDOVER REQUEST message or the S-NODE MODIFICATION REQUEST message or the S-NODE RELEASE REQUEST message, the latter two messages both defined in 3GPP TS 38.423. The target donor-CU may send a new message to the source donor-CU in response. For example, the new message may be the migration confirm message 1004, which may be the S-NODE ADDITION REQUEST ACKNOWLEDGE message, or the S-NODE RELEASE REQUEST ACKNOWLEDGE message, both defined in 3GPP TS 38.423. Alternatively, the new message may be the migration failure message 1005, which may be the S-NODE MODIFICATION REQUEST REJECT message, or the S-NODE RELEASE REJECT message, both defined in 3GPP TS 38.423.

Figure 11 shows a schematic representation of an example communication device (apparatus) or station, in accordance with one or more example embodiments of the present disclosure.

The communication device 1100 may preferably be a device such as a microcomputer, or a workstation or a mobile device or a light portable device. The communication device 1100 comprises a communication bus 1113 to which there are preferably connected:
- a central processing unit 1111, such as a microprocessor, denoted CPU. The central processing unit 1111 may be a single processing unit or processor or may comprise two or more processing units or processors carrying out the processing required for the operation of the communication device 1100. The number of processors and the allocation of processing functions to the central processing unit 1111 is a matter of design choice for a skilled person;
- memory for storing data and computer programs containing instructions for the operation of the communication device 1100. The computer programs may contain a number of different program elements (modules) or sub-routines containing instructions for a variety of operations and for implementing the methods in accordance with one or more embodiments of the invention; and
- at least one communication interface 1102 for communicating with other devices or nodes in a wireless communication system, such as a wireless communication system 100 of Figure 1. The at least one communication interface 1102 may be connected to a communication network 1103, such as a radio access network of the system 100, over which digital data packets or frames or control frames are transmitted. The frames are written from a FIFO sending memory in RAM 1112 to the network interface for transmission or are read from the network interface for reception and writing into a FIFO receiving memory in RAM 1112 under the control of a software application running in the CPU 1111.

Each of a donor CU, a donor DU and an IAB node may comprise such a communication device 1100.

The memory may include:
- a read only memory 1107, denoted ROM, for storing computer programs for implementing the methods in accordance with one or more embodiments of the invention;
- a random-access memory 1112, denoted RAM, for storing the executable code of methods according to one or more embodiments of the invention as well as the registers adapted to record variables and parameters necessary for implementing methods according to one or more embodiments of the invention.

Optionally, the communication device 1100 may also include the following components:
- a data storage means 1104 such as a hard disk, for storing computer programs for implementing methods according to one or more embodiments of the invention;
- a disk drive 1105 for a disk 1106, the disk drive being adapted to read data from the disk 1106 or to write data onto said disk;
- a screen 1109 for displaying decoded data and/or serving as a graphical interface with the user, by means of a keyboard 1110 or any other pointing means.

Preferably the communication bus provides communication and interoperability between the various elements included in the communication device 1100 or connected to it. The representation of the bus is not limiting and in particular, the central processing unit is operable to communicate instructions to any element of the communication device 1100 directly or by means of another element of the communication device 1100.

The disk 1106 may optionally be replaced by any information medium such as for example a compact disk (CD-ROM), rewritable or not, a ZIP disk, a USB key or a memory card and, in general terms, by an information storage means that can be read by a microcomputer or by a microprocessor, integrated or not into the communication device, possibly removable and adapted to store one or more programs whose execution enables methods according to embodiments of the invention to be implemented.

The executable code may optionally be stored either in read only memory 1107, on the hard disk 1104 or on a removable digital medium such as for example a disk 1106 as described previously. According to an optional variant, the executable code of the programs can be received by means of the communication network 1103, via the interface 1102, in order to be stored in one of the storage means of the communication device 1100, such as the hard disk 1104, before being executed.

The central processing unit 1111 is preferably adapted to control and direct the execution of the instructions or portions of software code of the program or programs according to the invention, which instructions are stored in one of the aforementioned storage means. On powering up, the program or programs that are stored in a non-volatile memory, for example on the hard disk 1104 or in the read only memory 1107, are transferred into the random-access memory 1112, which then contains the executable code of the program or programs, as well as registers for storing the variables and parameters necessary for implementing the invention.

In a preferred embodiment, the apparatus is a programmable apparatus which uses software to implement the invention. However, alternatively, the present invention may be implemented in hardware (for example, in the form of an Application Specific Integrated Circuit or ASIC).

While the present invention has been described with reference to embodiments, it is to be understood that the invention is not limited to the disclosed embodiments. It will be appreciated by those skilled in the art that various changes and modification might be made without departing from the scope of the invention, as defined in the appended claims. All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

Reference numerals appearing in the claims are by way of illustration only and shall have no limiting effect on the scope of the claims.

In the preceding embodiments, the functions described may be implemented in hardware, software, firmware, or any combination thereof. If implemented in software, the functions may be stored on or transmitted over, as one or more instructions or code, a computer-readable medium and executed by a hardware-based processing unit.

Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. Also, the techniques could be fully implemented in one or more circuits or logic elements.

This application is a divisional application of EP patent application no. 22835034.4 (the "parent application"). The original claims of the parent application are repeated below in the present specification as Clauses and form part of the content of this divisional application as filed.
Clause 1. A method for use in a process for migrating resources from a source Integrated Access and Backhaul, IAB, topology to a target IAB topology of a communication system, each of the source IAB topology and the target IAB topology comprising a set of IAB nodes and a donor Central Unit, CU, the method at the target donor CU of the target IAB topology comprising: determining migration capabilities of the target IAB topology for supporting additional resources of another IAB topology; sending, to the source donor CU of the source IAB topology, migration capability information, the migration capability information indicating the determined migration capabilities of the target IAB topology.
Clause 2. The method of clause 1, wherein the additional resources include at least one of: a) one or more additional IAB nodes in addition to the set of IAB nodes of the target IAB topology, and b) additional traffic in addition to traffic of the target IAB topology.
Clause 3. The method of clause 1 or clause 2, wherein the migration capability information includes at least one of: maximum bandwidth available for supporting additional traffic; maximum number of additional IAB nodes that can be supported; maximum number of additional User Equipment, UE, that can be supported; one or more levels of Quality of Service, QoS, that can be supported.
Clause 4. The method of clause 3, wherein the maximum bandwidth available is based on the maximum bandwidth available for uplink traffic and the maximum bandwidth available for downlink traffic.
Clause 5. The method of any one of the preceding clauses, wherein sending comprises sending, to the source donor CU, a migration indication message including the migration capability information, wherein the migration indication message comprises at least one of the following Information Elements, IEs, for the migration capability information: an IE indicating a maximum additional uplink bandwidth load for supporting additional uplink traffic offload; an IE indicating a maximum additional downlink bandwidth load for supporting additional downlink traffic offload; an IE indicating one or more levels of Quality of Service, QoS, that can be supported; an IE indicating a maximum number of additional IAB nodes that can be supported; an IE indicating maximum number of additional User Equipment, UE, that can be supported.
Clause 6. The method of any one of the preceding clauses, further comprising determining a routing issue at a IAB node of the source IAB topology, wherein sending comprises sending, to the source donor CU in response to determining the routing issue, the migration capability information.
Clause 7. The method of clause 6, further comprising sending, to the source donor CU in response to determining the routing issue, a notification indicating that the IAB node of the source IAB topology has a routing issue.
Clause 8. The method of clause 6 or clause 7, further comprising receiving information indicating that the IAB node of the source IAB topology has initiated a backhaul link re-establishment procedure, wherein determining a routing issue at a IAB node of the source IAB topology comprises determining the routing issue is a radio link failure, RLF, based on the received information.
Clause 9. The method of any one of the preceding clauses, further comprising receiving, from the source donor CU, a migration request, the migration request including migration information indicating resource requirements requested to support resources of the source IAB topology to be migrated to the target IAB topology based on the migration capability information.
Clause 10. The method of clause 9, further comprising: determining, based on the received migration information, whether the target IAB topology can support the resource requirements indicated in the migration information; in response to determining the target IAB topology can support the resource requirements, sending, to the source donor CU, a migration accept response indicating the resource requirements have been accepted.
Clause 11. The method of any one of clauses 1 to 8, further comprising receiving, from the source donor CU, a migration request, the migration request including migration information for at least one migration scheme, the migration information of the at least one migration scheme indicating resource requirements requested to support resources of the source IAB topology to be migrated to the target IAB topology for the at least one migration scheme.
Clause 12. The method of clause 11, wherein the migration request includes migration information for each of a plurality of different migration schemes, the migration information of each migration scheme of the plurality of different migration schemes indicating resource requirements requested for the respective migration scheme to support resources of the source IAB topology to be migrated to the target IAB topology.
Clause 13. The method of clause of clause 12, wherein the migration request for each of the plurality of different migration schemes further includes priority information for indicating a priority of the respective migration scheme.
Clause 14. The method of clause 12 or clause 13, further comprising: determining, for each of the plurality of different migration schemes based on the received migration information, whether the target IAB topology can support the resource requirements for the respective migration scheme; in response to determining the target IAB topology can support the resource requirements for at least one of the plurality of different migration schemes, sending, to the source donor CU, a migration accept response indicating the at least one of the plurality of different migration schemes has been accepted.
Clause 15. The method of clause 14, wherein the migration request for each of the plurality of different migration schemes further includes a migration scheme identifier for uniquely identifying the respective migration scheme, wherein the migration accept response includes the migration scheme identifier for the at least one of the migration schemes that has been accepted.
Clause 16. The method of any one of clauses 11 to 15, wherein the migration information of a migration scheme includes at least one of: bandwidth required to support traffic to be migrated; number of IAB nodes of the source IAB topology to be migrated; number of User Equipment, UE, to be migrated; maximum level of Quality of Service, QoS, required for the migration.
Clause 17. The method of clause 16, wherein the bandwidth required is based on the bandwidth required for uplink traffic to be migrated and the bandwidth required for downlink traffic to be migrated.
Clause 18. The method of any one of clauses 11 to 15, wherein receiving comprises receiving, from the source donor CU, a migration request message including the migration request, wherein the migration request message includes at least one of the following Information Elements, IE, for the migration information of a migration scheme: an IE indicating a maximum uplink bandwidth load required for uplink traffic to be migrated; an IE indicating a maximum downlink bandwidth required for downlink traffic to be migrated; an IE indicating one or more levels of Quality of Service, QoS, required for migration; an IE indicating a number of IAB nodes of the source IAB topology to be migrated; an IE indicating a number of User Equipment, UE, to be migrated.
Clause 19. A method for use in a process for migrating resources from a source Integrated Access and Backhaul, IAB, topology to a target IAB topology of a communication system, each of the source IAB topology and the target IAB topology comprising a set of IAB nodes and a donor Central Unit, CU, the method at the source donor CU of the source IAB topology comprising: determining a plurality of different migration schemes associated with resources to be migrated from the source IAB topology to the target IAB topology, each of the plurality of different migration schemes representing resource requirements for supporting resources to be migrated to the target IAB topology; sending, to the target donor CU of the target IAB topology, a migration request including migration information for each of the plurality of different migration schemes, the migration information indicating the resource requirements for the respective migration scheme; receiving, from the target donor CU, a migration response, wherein the migration response is one of: a) a migration accept response indicating at least one of the migration schemes has been accepted; and b) a migration reject response indicating none of the migration schemes have been accepted.
Clause 20. The method of clause 19, wherein the migration information for each of the plurality of different migration schemes includes at least one of: bandwidth required to support traffic to be migrated; number of IAB nodes of the source IAB topology to be migrated; number of User Equipment, UE, to be migrated; maximum level of Quality of Service, QoS, required for the migration.
Clause 21. The method of clause 20, wherein the bandwidth required is based on the bandwidth required for uplink traffic to be migrated and the bandwidth required for downlink traffic to be migrated.
Clause 22. The method of any one of clauses 19 to 21, wherein sending comprises sending, to the target donor CU, a migration request message including the migration request, wherein the migration request message includes at least one of the following Information Elements, IEs, for the migration information for each of the plurality of different migration schemes: an IE indicating a maximum uplink bandwidth load required for uplink traffic to be migrated; an IE indicating a maximum downlink bandwidth required for downlink traffic to be migrated; an IE indicating one or more levels of Quality of Service, QoS, required for migration; an IE indicating a number of IAB nodes of the source IAB topology to be migrated; an IE indicating a number of User Equipment, UE, to be migrated.
Clause 23. The method of any one of clauses 19 to 22, wherein the migration information for each of the plurality of different migration schemes further includes priority information for indicating a priority of the respective migration scheme.
Clause 24. The method of any one of clauses 19 to 23, wherein the migration information for each of the plurality of different migration schemes further includes a migration scheme identifier for uniquely identifying the respective migration scheme.
Clause 25. The method of any one of clauses 19 to 24, wherein the migration accept response includes the migration scheme identifier for the at least one of the migration schemes that has been accepted for identifying the at least one of the migration schemes that has been accepted.
Clause 26. The method of any one of clauses 19 to 25, wherein a migration reject response includes migration capability information, the migration capability information indicating capabilities of the target IAB topology for supporting additional resources of another IAB topology.
Clause 27. The method of any one of clauses 19 to 26, wherein the migration accept response includes migration capability information, the migration capability information indicating capabilities of the target IAB topology for supporting additional resources of another IAB topology.
Clause 28. The method of any one of clauses 19 to 27, wherein when the migration response is a migration accept response, receiving comprises receiving, from the target donor CU, a migration accept message including the migration accept response, wherein the migration accept message comprises at least one of the following Information Elements, IEs: an IE providing migration confirmation status that indicates that the at least one of the migration schemes is accepted; an IE identifying the at least one of the migration schemes accepted; an IE identifying all of the migration schemes accepted; an IE for migration information of the accepted migration scheme; an IE indicating migration capability information of the target IAB topology.
Clause 29. The method of any one of clauses 19 to 27, wherein when the migration response is a migration reject response, receiving comprises receiving, from the target donor CU, a migration reject message including the migration reject response, wherein the migration reject message comprises at least one of the following Information Elements, IEs: an IE providing migration rejection status that indicates that none of the migration schemes is accepted; an IE indicating the migration capability information of the target IAB topology; an IE indicating at least one of the migration capabilities of the target topology that none of the received migration schemes could match.
Clause 30. The method of any one of clauses 26 to 29, wherein the migration capability information includes at least one of: maximum bandwidth available for supporting additional traffic; maximum number of additional IAB nodes that can be supported; maximum number of additional User Equipment, UE, that can be supported; one or more levels of Quality of Service, QoS, that can be supported.
Clause 31. The method of any one of clauses 26 to 29, wherein the migration capability information includes at least one of the following Information Elements, IEs: an IE indicating a maximum additional uplink bandwidth load for supporting additional uplink traffic offload; an IE indicating a maximum additional downlink bandwidth load for supporting additional downlink traffic offload; an IE indicating one or more levels of Quality of Service, QoS, that can be supported; an IE indicating a maximum number of additional IAB nodes that can be supported; an IE indicating maximum number of additional User Equipment, UE, that can be supported.
Clause 32. The method of any one of clauses 19 to 31, further comprising determining a need to migrate resources from the source IAB topology, wherein determining a plurality of different migration schemes comprises determining a plurality of different migration schemes in response to determining a need to migrate resources.
Clause 33. The method of clause 32, further comprising receiving, from the target donor CU, a notification indicating that the IAB node of the source IAB topology has initiated a backhaul link re-establishment procedure and wherein determining a need to migrate resources comprises determining a need to migrate resources from the source IAB topology based on the received notification.
Clause 34. A method for use in a process for migrating resources from a source Integrated Access and Backhaul, IAB, topology to a target IAB topology of a communication system, each of the source IAB topology and the target IAB topology comprising a set of IAB nodes and a donor Central Unit, CU, the method comprising: determining, by the target donor CU of the target IAB topology, migration capabilities of the target IAB topology for supporting additional resources of another IAB topology; sending, by the target donor CU to the source donor CU of the source IAB topology, migration capability information, the migration capability information indicating the determined migration capabilities of the target IAB topology; determining, by the source donor CU, at least one migration scheme associated with resources to be migrated from the source IAB topology to the target IAB topology based on the migration capability information received from the target donor CU, the at least one migration scheme representing resource requirements for supporting resources to be migrated to the target IAB topology; sending, by the source donor CU to the target donor CU of the target IAB topology, a migration request including migration information for the at least one migration scheme, the migration information indicating the resource requirements for the at least one migration scheme; determining, by the target donor CU, based on the migration information received from the source donor CU, whether the target IAB topology can support the resource requirements indicated in the migration information; in response to determining the target IAB topology can support the resource requirements, sending, to the source donor CU, a migration accept response indicating the resource requirements have been accepted. Clause 35. A method for use in a process for migrating resources from a source Integrated Access and Backhaul, IAB, topology to a target IAB topology of a communication system, each of the source IAB topology and the target IAB topology comprising a set of IAB nodes and a donor Central Unit, CU, the method comprising: determining, by the source donor CU, a plurality of different migration schemes associated with resources to be migrated from the source IAB topology to the target IAB topology, each of the plurality of different migration schemes representing resource requirements for supporting resources to be migrated to the target IAB topology; sending, by the source donor CU to the target donor CU of the target IAB topology, a migration request including migration information for each of the plurality of different migration schemes, the migration information indicating the resource requirements for the respective migration scheme; determining, by the target donor CU, for each of the plurality of different migration schemes based on the received migration information, whether the target IAB topology can support the resource requirements for the respective migration scheme; in response to determining the target IAB topology can support the resource requirements for at least one of the plurality of different migration schemes, sending, by the target donor CU to the source donor CU, a migration accept response indicating at least one of the plurality of different migration schemes has been accepted; in response to determining the target IAB topology cannot support the resource requirements for any of the plurality of different migration schemes, sending, by the target donor CU to the source donor CU, a migration reject response indicating none of the plurality of different migration schemes has been accepted.
Clause 36. The method of clause 35, wherein a migration reject response includes migration capability information, the migration capability information indicating capabilities of the target IAB topology for supporting additional resources of another IAB topology. Clause 37. Apparatus for a target donor Central Unit, CU, for use in a process for migrating resources from a source Integrated Access and Backhaul, IAB, topology to a target IAB topology of a communication system, each of the source IAB topology and the target IAB topology comprising a set of IAB nodes and a donor Central Unit, CU, the apparatus comprising: one or more processing units; and a memory operably connectable to the one or more processing units and for storing instructions which, when executed by the one or more processing units, configure the one or more processing units to: determine migration capabilities of the target IAB topology for supporting additional resources of another IAB topology; send, to the source donor CU of the source IAB topology, migration capability information, the migration capability information indicating the determined migration capabilities of the target IAB topology.
Clause 38. The apparatus of clause 37, wherein the additional resources include at least one of: a) one or more additional IAB nodes in addition to the set of IAB nodes of the target IAB topology, and b) additional traffic in addition to traffic of the target IAB topology. Clause 39. The apparatus of clause 37 or clause 38, wherein the migration capability information includes at least one of: maximum bandwidth available for supporting additional traffic; maximum number of additional IAB nodes that can be supported; maximum number of additional User Equipment, UE, that can be supported; one or more levels of Quality of Service, QoS, that can be supported.
Clause 40. The apparatus of clause 39, wherein the maximum bandwidth available is based on the maximum bandwidth available for uplink traffic and the maximum bandwidth available for downlink traffic.
Clause 41. The apparatus of any one of the clauses 37 to 40, wherein the one or more processing units are configured to send, to the source donor CU, a migration indication message including the migration capability information, wherein the migration indication message comprises at least one of the following Information Elements, IEs, for the migration capability information: an IE indicating a maximum additional uplink bandwidth load for supporting additional uplink traffic offload; an IE indicating a maximum additional downlink bandwidth load for supporting additional downlink traffic offload; an IE indicating one or more levels of Quality of Service, QoS, that can be supported; an IE indicating a maximum number of additional IAB nodes that can be supported; an IE indicating maximum number of additional User Equipment, UE, that can be supported.
Clause 42. The apparatus of any one of the clauses 37 to 41, wherein the one or more processing units are configured to determine a routing issue at a IAB node of the source IAB topology, and to send, to the source donor CU in response to determining the routing issue, the migration capability information.
Clause 43. The apparatus of clause 42, wherein the one or more processing units are configured to send, to the source donor CU in response to determining the routing issue, a notification indicating that the IAB node of the source IAB topology has a routing issue. Clause 44. The apparatus of clause 42 or clause 43, wherein the one or more processing units are configured to receive information indicating that the IAB node of the source IAB topology has initiated a backhaul link re-establishment procedure, and to determine the routing issue is a radio link failure, RLF, based on the received information.
Clause 45. The apparatus of any one of the clauses 37 to 44, wherein the one or more processing units are configured to receive, from the source donor CU, a migration request, the migration request including migration information indicating resource requirements requested to support resources of the source IAB topology to be migrated to the target IAB topology based on the migration capability information.
Clause 46. The apparatus of clause 45, wherein the one or more processing units are configured to: determine, based on the received migration information, whether the target IAB topology can support the resource requirements indicated in the migration information; in response to determining the target IAB topology can support the resource requirements, send, to the source donor CU, a migration accept response indicating the resource requirements have been accepted.
Clause 47. The apparatus of any one of clauses 37 to 44, further comprising receiving, from the source donor CU, a migration request, the migration request including migration information for at least one migration scheme, the migration information of the at least one migration scheme indicating resource requirements requested to support resources of the source IAB topology to be migrated to the target IAB topology for the at least one migration scheme.
Clause 48. The apparatus of clause 47, wherein the migration request includes migration information for each of a plurality of different migration schemes, the migration information of each migration scheme of the plurality of different migration schemes indicating resource requirements requested for the respective migration scheme to support resources of the source IAB topology to be migrated to the target IAB topology.
Clause 49. The apparatus of clause of clause 48, wherein the migration request for each of the plurality of different migration schemes further includes priority information for indicating a priority of the respective migration scheme.
Clause 50. The apparatus of clause 48 or clause 49, wherein the one or more processing units are configured to:
   determine, for each of the plurality of different migration schemes based on the received migration information, whether the target IAB topology can support the resource requirements for the respective migration scheme;
   in response to determining the target IAB topology can support the resource requirements for at least one of the plurality of different migration schemes, send, to the source donor CU, a migration accept response indicating the at least one of the plurality of different migration schemes has been accepted.
Clause 51. The apparatus of clause 50, wherein the migration request for each of the plurality of different migration schemes further includes a migration scheme identifier for uniquely identifying the respective migration scheme, wherein the migration accept response includes the migration scheme identifier for the at least one of the migration schemes that has been accepted.
Clause 52. The apparatus of any one of clauses 47 to 51, wherein the migration information of a migration scheme includes at least one of: bandwidth required to support traffic to be migrated; number of IAB nodes of the source IAB topology to be migrated; number of User Equipment, UE, to be migrated; maximum level of Quality of Service, QoS, required for the migration.
Clause 53. The apparatus of clause 52, wherein the bandwidth required is based on the bandwidth required for uplink traffic to be migrated and the bandwidth required for downlink traffic to be migrated.
Clause 54. The apparatus of any one of clauses 47 to 51, wherein the one or more processing units are configured to receive, from the source donor CU, a migration request message including the migration request, wherein the migration request message includes at least one of the following Information Elements, IE, for the migration information of a migration scheme: an IE indicating a maximum uplink bandwidth load required for uplink traffic to be migrated; an IE indicating a maximum downlink bandwidth required for downlink traffic to be migrated; an IE indicating one or more levels of Quality of Service, QoS, required for migration; an IE indicating a number of IAB nodes of the source IAB topology to be migrated; an IE indicating a number of User Equipment, UE, to be migrated. Clause 55. The apparatus of any one of clauses 47 to 54, wherein a migration scheme represents resource requirements for supporting resources to be migrated to the target IAB topology.
Clause 56. Apparatus for a source donor Central Unit, CU, for use in a process for migrating resources from a source Integrated Access and Backhaul, IAB, topology to a target IAB topology of a communication system, each of the source IAB topology and the target IAB topology comprising a set of IAB nodes and a donor Central Unit, CU, the apparatus comprising: one or more processing units; and a memory operably connectable to the one or more processing units and for storing instructions which, when executed by the one or more processing units, configure the one or more processing units to: determine a plurality of different migration schemes associated with resources to be migrated from the source IAB topology to the target IAB topology, each of the plurality of different migration schemes representing resource requirements for supporting resources to be migrated to the target IAB topology; send, to the target donor CU of the target IAB topology, a migration request including migration information for each of the plurality of different migration schemes, the migration information indicating the resource requirements for the respective migration scheme; receive, from the target donor CU, a migration response, wherein the migration response is one of: a) a migration accept response indicating at least one of the migration schemes has been accepted; and b) a migration reject response indicating none of the migration schemes have been accepted.
Clause 57. The apparatus of clause 56, wherein the migration information for each of the plurality of different migration schemes includes at least one of: bandwidth required to support traffic to be migrated; number of IAB nodes of the source IAB topology to be migrated; number of User Equipment, UE, to be migrated; maximum level of Quality of Service, QoS, required for the migration.
Clause 58. The apparatus of clause 57, wherein the bandwidth required is based on the bandwidth required for uplink traffic to be migrated and the bandwidth required for downlink traffic to be migrated.
Clause 59. The apparatus of any one of clauses 56 to 58, wherein the one or more processing units are configured to send, to the target donor CU, a migration request message including the migration request, wherein the migration request message includes at least one of the following Information Elements, IEs, for the migration information for each of the plurality of different migration schemes: an IE indicating a maximum uplink bandwidth load required for uplink traffic to be migrated; an IE indicating a maximum downlink bandwidth required for downlink traffic to be migrated; an IE indicating one or more levels of Quality of Service, QoS, required for migration; an IE indicating a number of IAB nodes of the source IAB topology to be migrated; an IE indicating a number of User Equipment, UE, to be migrated.
Clause 60. The apparatus of any one of clauses 56 to 59, wherein the migration information for each of the plurality of different migration schemes further includes priority information for indicating a priority of the respective migration scheme.
Clause 61. The apparatus of any one of clauses 56 to 60, wherein the migration information for each of the plurality of different migration schemes further includes a migration scheme identifier for uniquely identifying the respective migration scheme. Clause 62. The apparatus of any one of clauses 56 to 61, wherein the migration accept response includes the migration scheme identifier for the at least one of the migration schemes that has been accepted for identifying the at least one of the migration schemes that has been accepted.
Clause 63. The apparatus of any one of clauses 56 to 62, wherein a migration reject response includes migration capability information, the migration capability information indicating capabilities of the target IAB topology for supporting additional resources of another IAB topology.
Clause 64. The apparatus of any one of clauses 56 to 63, wherein the migration accept response includes migration capability information, the migration capability information indicating capabilities of the target IAB topology for supporting additional resources of another IAB topology.
Clause 65. The apparatus of any one of clauses 56 to 64, wherein the one or more processing units are configured to receive, from the target donor CU, a migration accept message including the migration accept response, wherein the migration accept message comprises at least one of the following Information Elements, IEs: an IE providing migration confirmation status that indicates that the at least one of the migration schemes is accepted; an IE identifying the at least one of the migration schemes accepted; an IE identifying all of the migration schemes accepted; an IE for migration information of the accepted migration scheme; an IE indicating migration capability information of the target IAB topology. Clause 66. The apparatus of any one of clauses 56 to 64, wherein the one or more processing units are configured to receive, from the target donor CU, a migration reject message including the migration reject response, wherein the migration reject message comprises at least one of the following Information Elements, IEs: an IE providing migration rejection status that indicates that none of the migration schemes is accepted; an IE indicating the migration capability information of the target IAB topology; an IE indicating at least one of the migration capabilities of the target topology that none of the received migration schemes could match.
Clause 67. The apparatus of any one of clauses 63 to 66, wherein the migration capability information includes at least one of: maximum bandwidth available for supporting additional traffic; maximum number of additional IAB nodes that can be supported; maximum number of additional User Equipment, UE, that can be supported; one or more levels of Quality of Service, QoS, that can be supported.
Clause 68. The apparatus of any one of clauses 63 to 66, wherein the migration capability information includes at least one of the following Information Elements, IEs: an IE indicating a maximum additional uplink bandwidth load for supporting additional uplink traffic offload; an IE indicating a maximum additional downlink bandwidth load for supporting additional downlink traffic offload; an IE indicating one or more levels of Quality of Service, QoS, that can be supported; an IE indicating a maximum number of additional IAB nodes that can be supported; an IE indicating maximum number of additional User Equipment, UE, that can be supported.
Clause 69. The apparatus of any one of clauses 56 to 68, further comprising determining a need to migrate resources from the source IAB topology, wherein determining a plurality of different migration schemes comprises determining a plurality of different migration schemes in response to determining a need to migrate resources.
Clause 70. The apparatus of clause 69, wherein the one or more processing units are configured to receive, from the target donor CU, a notification indicating that the IAB node of the source IAB topology has initiated a backhaul link re-establishment procedure and to determine a need to migrate resources from the source IAB topology based on the received notification.
Clause 71. A donor Central Unit, CU, for managing a process for migrating resources from a source Integrated Access and Backhaul, IAB, topology to a target IAB topology of a communication system, the donor CU comprising: at least one communication interface; a central processing unit coupled to the at least one communication interface and configured to perform the method as recited in any one of clauses 1 to 33.
Clause 72. A computer program comprising instructions which, when the program is executed by a computer, cause the computer to carry out the control method according to any one of clauses 1 to 33.
Clause 73. A computer-readable medium carrying a computer program according to clause 72.

## Claims

1. A method for use in a process for migrating traffic from a first Integrated Access and Backhaul, IAB, topology (6001) to a second IAB topology (6002) of a communication system (600), each of the first IAB topology and the second IAB topology comprising a set of IAB nodes (610, 620, 630, 660, 670, 690) and a donor Central Unit, CU, (601, 602), the method at a first donor CU (601) of the first IAB topology (6001) comprising:
after making a decision associated with traffic to be offloaded from the first IAB topology (6001) to the second IAB topology (6002), sending, to a second donor CU (602) of the second IAB topology, a request related to migration of traffic including at least one set of Information Elements, IEs, each of the at least one set of IEs including an identifier related to the traffic and information related to Quality of Service, QoS, associated with the traffic; and
receiving, from the second donor CU (602), a first message, wherein in a case where at least one of the set of IEs in the request is accepted by the second donor CU (602), the first message includes information indicating the at least one of the set of IEs has been accepted and the at least one identifier included in the respective accepted set of IEs.

2. The method according to claim 1, wherein the receiving comprises receiving, in a case where the request is not accepted for all of the IE sets included in the request by the second donor CU (602), a second message not including the identifier of the transmitted IE set.

3. The method according to claim 1 or claim 2, wherein the information related to the QoS associated with the traffic includes information about a delay requirement associated with the traffic.

4. The method according to any one of claims 1 to 3, wherein the information related to the QoS associated with the traffic includes information about a priority associated with the traffic.

5. The method according to any one of claims 1 to 4, further comprising detecting radio link failure, RLF, in the first IAB topology.

6. The method according to claim 5, wherein, in the sending, the request is sent after the RLF has been detected.

7. The method according to any one of claims 1 to 4, wherein, in the sending, the request is sent after an RLF has occured in the first IAB topology.

8. The method of any one of claims 1 to 7, further comprising:
determining traffic which is to be migrated from the first IAB topology (6001) to the second IAB topology (6002).

9. A method for use in a process for migrating traffic from a first Integrated Access and Backhaul, IAB, topology (6001) to a second IAB topology (6002) of a communication system (600), each of the first IAB topology and the second IAB topology comprising a set of IAB nodes (610, 620, 630, 660, 670, 690) and a donor Central Unit, CU, (601, 602), the method at a second donor CU (602) of the second IAB topology (6002) comprising:
receiving, from a first donor CU (601) of the first IAB topology (6001), a request related to migration of traffic including at least one set of Information Elements, IEs, each of the at least one set of IEs including an identifier related to the traffic and information related to Quality of Service, QoS, associated with the traffic; and
transmitting, to the first donor CU (601) of the first IAB topology (6001), a first message, wherein in a case where at least one of the set of IEs in the request is accepted by the second donor CU (602), the first message includes information indicating the at least one of the set of IEs has been accepted and the at least one identifier included in the respective accepted set of IEs.

10. The method according to claim 9, wherein the transmitting comprises transmitting, in a case where the request is not accepted for all of the IE sets included in the request by the second donor CU (602), a second message not including the identifier of the transmitted IE set.

11. The method according to any one of claim 9 or claim 10, wherein the information related to the QoS associated with the traffic includes information about a delay requirement associated with the traffic.

12. The method according to any one of claims 9 to 11, wherein the information related to the QoS associated with the traffic includes information about a priority associated with the traffic.

13. The method according to any one of claims 9 to 12, wherein, in the receiving, the request is received after radio link failure, RLF, has occured in the first IAB topology.

14. The method according to any one of the preceding claims, wherein the first mesage is a response message for accepting the at least one of the set of IEs.

15. The method according to claim 2 or claim 10, wherein the second message is a reject message for rejecting all of the IE sets included in the request.

16. The method according to any one of the preceding claims, wherein the first message includes the information related to the QoS associated with the traffic.

17. A communication apparatus capable of operating as a first donor Central Unit, CU, in a first Integrated Access and Backhaul, IAB, topology, the communication apparatus comprising:
one or more processing units configured to:
after making a decision associated with traffic to be offloaded from the first IAB topology (6001) to a second IAB topology (6002), send, to a second donor CU (602) of the second IAB topology, a request related to migration of traffic including at least one set of Information Elements, IEs, each of the at least one set of IEs including an identifier related to the traffic and information related to Quality of Service, QoS, associated with the traffic;
in a case where at least one of the set of IEs in the request is accepted by the second donor CU (602), receive, from the second donor CU (602), a first message including information indicating the at least one of the set of IEs has been accepted and the at least one identifier included in the respective accepted set of IEs; and
in a case where the request is not accepted for all of the IE sets included in the request by the second donor CU (602), receive, from the second donor CU (602), a second message not including the identifier of the transmitted IE set.

18. A communication apparatus capable of operating as a second donor Central Unit, CU, in a second Integrated Access and Backhaul, IAB, topology, the communication apparatus comprising:
one or more processing units configured to:
receive, from a first donor CU (601) of a first IAB topology, a request related to migration of traffic including at least one set of Information Elements, IEs, each of the at least one set of IEs including an identifier related to the traffic and information related to Quality of Service, QoS, associated with the traffic;
in a case where at least one of the set of IEs in the request is accepted by the second donor CU (602), transmit, to the first donor CU (601) of the first IAB topology, a first message including information indicating the at least one of the set of IEs has been accepted and the at least one identifier included in the respective accepted set of IEs; and
in a case where the request is not accepted for all of the IE sets included in the request by the second donor CU (602), transmit, to the first donor CU (601) of the first IAB topology, a second message not including the identifier of the transmitted IE set.

19. A computer program comprising instructions which, when the program is executed by a computer, cause the computer to carry out the control method according to any one of claims 1 to 16.

20. A computer-readable medium carrying the computer program according to claim 19.
